# EUROPEAN PATENT APPLICATION

(11) **EP 4 518 471 A1**
(43) Date of publication of application: **05.03.2025**
(21) Application number: 22939096.8
(22) Date of filing: 28.04.2022
(51) Int. Cl.: H04W 72/02, H04L 5/16

(54) **REPEATER CONFIGURATION METHOD AND APPARATUS**

(71) Applicant: FUJITSU LIMITED, Kawasaki-shi, Kanagawa 211-8588 (JP)
(72) Inventor: TIAN, Yan, Beijing 100022 (CN); ZHANG, Lei, Beijing 100022 (CN); JIANG, Qinyan, Beijing 100022 (CN)
(74) Representative: Haseltine Lake Kempner LLP
(86) International application number: PCT/CN2022/089922
(87) International publication number: WO 2023/206244

(57) **Abstract**

Embodiments of this disclosure provide a method and device for configuring a repeater. The device includes: a first receiving unit configured to receive time division duplex (TDD) configuration information from a network device; and a first determining unit configured to determine a forwarding behavior on a first flexible time unit.

## Description

### Technical Field

This disclosure relates to the field of communication technologies.

### Background

Compared with traditional 2G (second generation mobile communication technology), 3G (third generation mobile communication technology) and 4G (fourth generation mobile communication technology) systems, a 5G (fifth generation mobile communication technology) system is able to provide larger bandwidths and higher data rates, and is able to support more types of terminals and vertical services. For this reason, a frequency band range/operating bandwidth supported by a 5G system is/are obviously higher than those of 2G, 3G and 4G systems, and the 5G system supports higher carrier frequencies. For example, a 5G system may be deployed in a millimeter waveband.

However, the higher a carrier frequency, the more severe a fading experienced by signals during transmission. Therefore, in actual deployment of a 5G system, especially in the millimeter waveband, how to better enhance cell coverage has become an urgent problem to be solved.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In order to better solve the coverage problem of cellular mobile communication systems in practical deployment, use of a radio frequency (RF) repeater to amplify and forward signals between it and a forwarding device is commonly used means of deployment. RF repeaters are widely used in actual deployment of 2G, 3G and 4G systems, with advantages that it is low in cost, easy in deployment and has no excessive latency. Generally speaking, a conventional RF repeater is a device that amplifies and forwards signals between devices in the RF domain. That is, conventional RF repeaters are non-regenerative type of relay nodes that simply amplify and forward all received signals directly.

In uplink/downlink time division duplex (UL/DL TDD) configuration of an R-17 terminal equipment, a flexible area is configured between a downlink area and an uplink area. In addition to allowing the terminal equipment to flexibly utilize time-domain resources of this area for some sudden transmissions, the terminal equipment may also be provided with a period of buffer time after receiving data in the downlink area and before transmitting data in the uplink area, so that the terminal equipment have sufficient time to process the received data and prepare for transmitting data.

In the UL/DL TDD configuration of R-17, a semi-statically configured cell-common flexible area may be modified by exclusive configuration of the terminal equipment, that is, performing transmission and reception on the flexible area according to the exclusive configuration of the terminal equipment. Dynamic UL/DL TDD configuration of the terminal equipment may modify the semi-statically configured flexible area. When the terminal equipment has no dynamic configuration in the flexible area, it detects a physical downlink control channel (PDCCH) on a corresponding control resource set (CORESET) according to search space configuration, and determines transmission and reception directions in the flexible area according to an indication of the PDCCH. The terminal equipment does not perform reception and transmission of channels and signals in the flexible area before it detects a corresponding scheduling indication.

In R-17, in order to enhance coverage of a network device (such as a base station), it is proposed that an RF repeater amplify and forward communications between the terminal equipment and the network device. An existing technique of forwarding of the RF repeater is solved through implementation.

It was found by the inventors that in the related art, no corresponding solution is proposed for the TDD configuration used by the repeater for forwarding, and there is also no solution for how to determine forwarding behaviors and related configuration modes of the repeater in the flexible area of the TDD configuration used for forwarding, resulting in that the repeater is unable to flexibly utilize the flexible area.

In addition, communications (also known as transmissions) may be performed between the repeater and the network device. In the related art, a configuration relationship between transmission and forwarding of the repeater in the configured flexible area is not taken into account, and there is no solution for how the repeater determines transmission and forwarding behaviors in the configured flexible area, resulting in conflicts between the forwarding and transmission of the repeater in the flexible area.

In order to solve one or more of the above problems, embodiments of this disclosure provide a method and device for configuring a repeater. That is, in order to solve one or more of the above problems, the embodiments of this disclosure propose corresponding solutions.

According to a first aspect of the embodiments of this disclosure, there is provided a device for configuring a repeater, the device being provided in the repeater, and the device including: a first receiving unit configured to receive time division duplex (TDD) configuration information from a network device; and a first determining unit configured to determine a forwarding behavior on a first flexible time unit.

According to a second aspect of the embodiments of this disclosure, there is provided a device for configuring a repeater, the device being provided in a network device, and the device including: a first transmitting unit configured to transmit time division duplex (TDD) configuration information to a repeater.

According to a third aspect of the embodiments of this disclosure, there is provided a repeater, including the device described in the first aspect of the embodiments of this disclosure.

According to a fourth aspect of the embodiments of this disclosure, there is provided a network device, including the device described in the second aspect of the embodiments of this disclosure.

According to a fifth aspect of the embodiments of this disclosure, there is provided a communication system, including the repeater described in the third aspect of the embodiments of this disclosure and/or the network device described in the fourth aspect of the embodiments of this disclosure.

According to a sixth aspect of the embodiments of this disclosure, there is provided a method for configuring a repeater, the method including: receiving time division duplex (TDD) configuration information by a repeater from a network device; and determining a forwarding behavior on a first flexible time unit by the repeater.

According to a seventh aspect of the embodiments of this disclosure, there is provided a method for configuring a repeater, the method including: transmitting time division duplex (TDD) configuration information by a network device to a repeater.

According to an eighth aspect of the embodiments of this disclosure, there is provided a computer readable program, which, when executed in a device for configuring a repeater or a repeater, will cause the device for configuring a repeater or the repeater to carry out the method for configuring a repeater as described in the sixth aspect of the embodiments of this disclosure.

According to a ninth aspect of the embodiments of this disclosure, there is provided a computer readable medium, including a computer readable program, which will cause a device for configuring a repeater or a repeater to carry out the method for configuring a repeater as described in the sixth aspect of the embodiments of this disclosure.

According to a tenth aspect of the embodiments of this disclosure, there is provided a computer readable program, which, when executed in a device for configuring a repeater or a network device, will cause the device for configuring a repeater or the network device to carry out the method for configuring a repeater as described in the seventh aspect of the embodiments of this disclosure.

According to an eleventh aspect of the embodiments of this disclosure, there is provided a computer readable medium, including a computer readable program, which will cause a device for configuring a repeater or a network device to carry out the method for configuring a repeater as described in the seventh aspect of the embodiments of this disclosure.

An advantage of the embodiments of this disclosure exists in that,
by transmitting the TDD configuration information to the repeater, the repeater is able to determine the configured flexible area, and the repeater determines the forwarding behavior on the first flexible time unit, so that the forwarding of the repeater is more flexible for sudden service transmissions, and the repeater has a period of buffer time between downlink forwarding and uplink forwarding, thereby enabling the repeater to have sufficient time to process the received data and make preparation for transmitting services.

Furthermore, the configuration relationship between the transmission and forwarding of the repeater in the flexible area is also taken into account, thereby avoiding conflicts between the forwarding and transmission of the repeater in the flexible area, and ensuring reliability of the forwarding and transmission of the repeater.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is schematic diagram of a communication system of the embodiments of this disclosure;
FIG. 2 is a logical schematic diagram of a repeater of the embodiments of this disclosure;
FIG. 3 is a schematic diagram of the method for configuring a repeater of embodiment 1 of this disclosure;
FIG. 4 is a schematic diagram of time division duplex configuration of embodiment 1 of this disclosure;
FIG. 5 is a schematic diagram of a method for determining a forwarding behavior on a first flexible time unit by the repeater of embodiment 1 of this disclosure;
FIG. 6 is a schematic diagram of the method for configuring a repeater of embodiment 2 of this disclosure;
FIG. 7 is an interaction graph of the method for configuring of embodiment 2 of this disclosure between the network device and the repeater;
FIG. 8 is another interaction graph of the method for configuring of embodiment 2 of this disclosure between the network device and the repeater;
FIG. 9 is a schematic diagram of the device for configuring a repeater of embodiment 3 of this disclosure;
FIG. 10 is a schematic diagram of the device for configuring a repeater of embodiment 4 of this disclosure;
FIG. 11 is a block diagram of a systematic structure of the repeater of embodiment 5 of this disclosure; and
FIG. 12 is a block diagram of a systematic structure of the network device of embodiment 6 of this disclosure.

### Detailed Description

These and further aspects and features of this disclosure will be apparent with reference to the following description and attached drawings. **In** the description and drawings, particular embodiments of this disclosure have been disclosed in detail as being indicative of some of the ways in which the principles of this disclosure may be employed, but it is understood that this disclosure is not limited correspondingly in scope. Rather, this disclosure includes all changes, modifications and equivalents coming within the terms of the appended claims.

**In** the embodiments of this disclosure, terms "first", and "second", etc. are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

**In** the embodiments of this disclosure, single forms "a", and "the", etc. include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

**In** the embodiments of this disclosure, "multiple" or "multiple types of" refers to at least two (two or more than two) or at least two types.

**In** the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc. and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. For example, a 5G base station gNB may include a gNB CU and one or more gNB DUs, wherein the CU/DU is a logical node of the gNB having a part of functions of the gNB. And the term "cell" may refer to a base station and/or its coverage area, depending on a context of the term.

In the embodiments of this disclosure, the term "user equipment (UE)" or "terminal equipment (TE)" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The user equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc. the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

**In** the embodiments of this disclosure, "a repeater" is a relay device, such as a relay device provided in a serving cell to which a network device corresponds, which is used to forward transmission signals between the network device and terminal equipments. In addition, it may be referred to as a repeater node.

In the embodiments of this disclosure, the forwarding of the repeater includes uplink forwarding and/or downlink forwarding.

The uplink forwarding includes forwarding channels and/or signals transmitted by a terminal equipment to a network device, and the downlink forwarding includes forwarding channels and/or signals transmitted by a network device to a terminal equipment.

In the embodiments of this disclosure, the repeater has a communication function, that is, the repeater is able to receive information (including channels and/or signals) from the network device, i.e. downlink transmission, and/or transmit information (including channels and/or signals) to the network device, i.e. uplink transmission.

The receiving information (downlink transmission) includes at least one of detecting a sequence, demodulating, descrambling, decoding, and interpreting information, etc, and the transmitting information (uplink transmission) includes at least one of generating information, generating a sequence, scrambling, encoding, modulating, and mapping to a time-frequency resource, etc.

A process of forwarding information (uplink forwarding and/or downlink forwarding) does not include at least one of the above processings included in the receiving information (downlink transmission) and/or the transmitting information (uplink transmission).

In the embodiments of this disclosure, the communication between the repeater and the network device is also referred to as transmission of the repeater.

In the embodiments of this disclosure, the repeater may be referred to as a network-controlled repeater (NC-repeater). However, other names may also be used, and various names of the repeater are not intended to limit the embodiments of this disclosure.

In the embodiments of this disclosure, the repeater may include a communication module (also referred to as an MT module) and a forwarding module (also referred to as an RU module). The communication module is used to support a communication function between it and the network devices (such as the above receiving and/or transmitting information), and the forwarding module is used to support its amplification and forwarding functions.

In the embodiments of this disclosure, a link between the network device and the communication module is a communication link or a control link. The communication module of the repeater may receive information from the network device via the communication link or control link, and the communication link or control link may be based on an existing Uu interface. Moreover, the communication module of the repeater may apply information received from the network device to the forwarding module through internal operations of the repeater.

Scenarios of the embodiments of this disclosure and problems shall be described below by way of examples; however, the embodiments of this disclosure are not limited thereto.

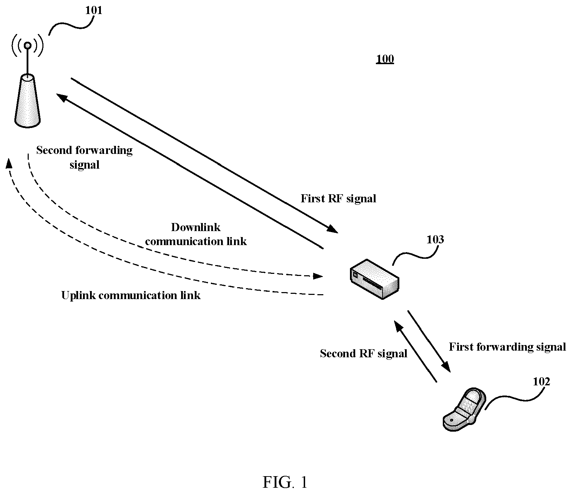

FIG. 1 is a schematic diagram of a communication system of the embodiments of this disclosure. As shown in FIG. 1, a communication system 100 may include a network device 101, a terminal equipment 102 and a repeater 103.

In the embodiments of this disclosure, existing traffics or traffics that may be implemented in the future may be performed between the network device 101 and the terminal equipment 102. For example, such traffics may include but not limited to enhanced mobile broadband (eMBB), massive machine type communication (MTC), and ultra-reliable and low-latency communication (URLLC), etc.

As shown in FIG. 1, the repeater 103 receives a first RF signal from the network device 101, amplifies the first RF signal to obtain a first forwarding signal and transmits it to the terminal equipment 102, and/or, the repeater 103 receives a second RF signal from the terminal equipment 102, amplifies the second RF signal to obtain a second forwarding signal and transmits it to the network device 101.

In addition, as shown in FIG. 1, communication between the repeater 103 and the network device 101 may be performed via a downlink communication link (down C-link) and/or an uplink communication link (up C-link).

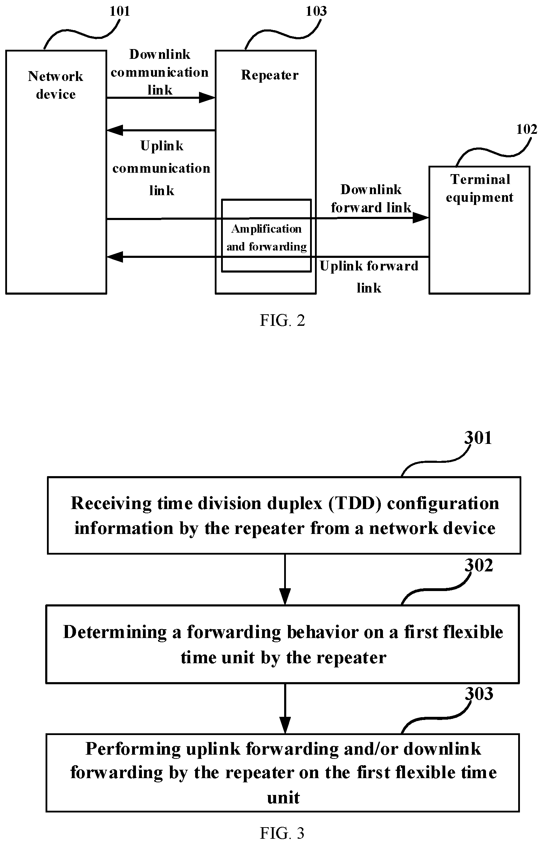

FIG. 2 is a logical schematic diagram of the repeater of the embodiments of this disclosure. As shown in FIG. 2, in a downlink forward link (or a downlink forwarding link (down F-link)) and an uplink forward link (or an uplink forwarding link (up F-link)), the repeater 103 amplifies and forwards signals between the network device 101 and the terminal equipment 102. In addition, for example, the repeater 103 and the network device 101 may perform communication via a downlink communication link and/or an uplink communication link.

Implementations of the embodiments of this disclosure shall be described below with reference to the accompanying drawings. These implementations are illustrative only, and are not intended to limit this disclosure.

### Embodiment 1

The embodiments of this disclosure provide a method for configuring a repeater, applicable to a repeater, such as the repeater 103 in FIGs. 1 and 2.

FIG. 3 is a schematic diagram of the method for configuring a repeater of embodiment 1 of this disclosure. As shown in FIG. 3, the method includes:
step 301: receiving time division duplex (TDD) configuration information by the repeater from a network device; and
step 302: determining a forwarding behavior on a first flexible time unit by the repeater.

Thus, by transmitting the TDD configuration information to the repeater, the repeater is able to determine the configured flexible area, and the repeater determines the forwarding behavior on the first flexible time unit, so that the forwarding of the repeater is more flexible for sudden service transmissions, and the repeater has a period of buffer time between downlink forwarding and uplink forwarding, thereby enabling the repeater to have sufficient time to process the received data and make preparation for transmitting services.

In step 301, the repeater receives the time division duplex configuration information from the network device, for example, the repeater receives the time division duplex configuration information via the downlink communication link in FIGs. 1 and 2.

In some embodiments, the time division duplex configuration is also referred to as uplink/downlink time division duplex (UL/DL TDD) configuration.

In some embodiments, a time-domain resource configured by the time division duplex configuration information includes at least one of the following time units: a downlink time unit, a flexible time unit, and an uplink time unit.

In some embodiments, the downlink time unit may also be referred to as a downlink time area or a downlink area, the uplink time unit may also be referred to as an uplink time area or an uplink area, and the flexible time unit may also be referred to as a flexible time area or a flexible area.

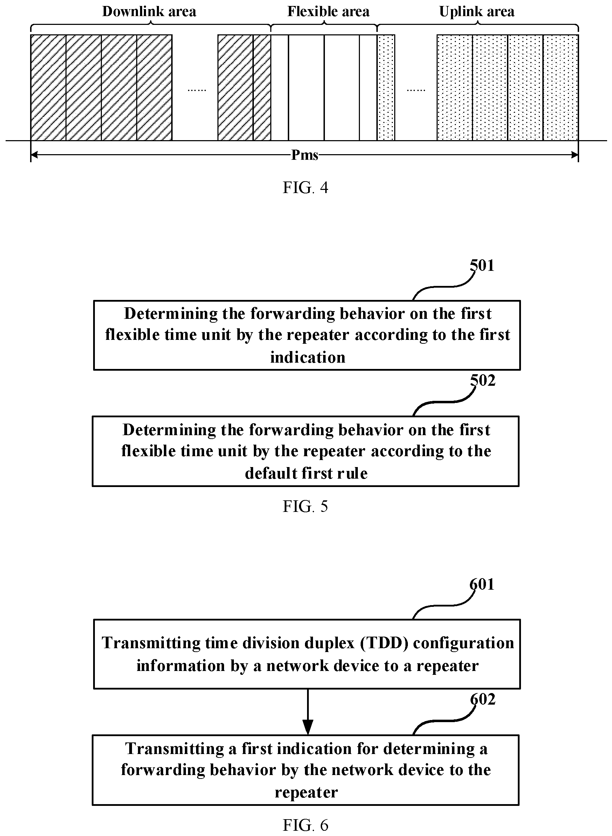

FIG. 4 is a schematic diagram of the time division duplex configuration of embodiment 1 of this disclosure. As shown in FIG. 4, within a time division duplex period, the time-domain resource of the time division duplex configuration includes a downlink time unit, a flexible time unit, and an uplink time unit.

In some embodiments, "a time unit" or "a time area" or "an area" refers to a period of time in the time domain, which may include one or more slots and/or one or more symbols; however, the embodiments of this disclosure is not limited thereto.

In some embodiments, for the time division duplex configuration used for forwarding, the repeater performs downlink forwarding on the downlink time unit, and performs uplink forwarding on the uplink time unit.

The uplink forwarding includes forwarding channels and/or signals transmitted by the terminal equipment to the network device, and the downlink forwarding includes forwarding channels and/or signals transmitted by the network device to the terminal equipment.

In addition, how the repeater determines forwarding behaviors on the flexible time unit shall be described below in detail.

In some embodiments, the time division duplex configuration includes semi-static time division duplex configuration and/or dynamic time division duplex configuration.

In some embodiments, the semi-static time division duplex configuration is indicated by at least one of RRC signaling, MAC layer signaling and physical layer signaling, that is, the semi-static time division duplex configuration is indicated by semi-static signaling.

For example, the semi-static time division duplex configuration is indicated by higher-layer signaling, such as RRC signaling.

In some embodiments, the semi-static time division duplex configuration includes cell-common time division duplex configuration and/or repeater-dedicated time division duplex configuration.

That is, the semi-static time division duplex configuration may include the cell-common time division duplex configuration, or may include the repeater-dedicated time division duplex configuration, or may include the cell-common time division duplex configuration and the repeater-dedicated time division duplex configuration.

In some embodiments, for the cell-common time division duplex configuration, it is indicated by, for example, semi-static cell-common signaling, and for the repeater-dedicated time division duplex configuration, it is indicated by, for example, semi-static repeater-dedicated signaling.

In some embodiments, the cell-common time division duplex configuration includes configuring one pattern or two patterns.

For example, the cell-common time division duplex configuration includes configuring a first pattern (pattern 1); or, the cell-common time division duplex configuration includes configuring a first pattern (pattern 1) and a second pattern (pattern 2).

For example, the cell-common time division duplex configuration includes common configuration parameters, the first pattern (pattern 1) and the second pattern (pattern 2), wherein the second pattern (pattern 2) is optional, that is, the second pattern (pattern 2) may be present or may be absent.

In some embodiments, for the case where the cell-common time division duplex configuration includes configuring the first pattern (pattern 1), the first pattern (pattern 1) is indicated by at least one of RRC signaling, MAC layer signaling and physical layer signaling.

For example, relevant configuration is indicated by the higher-layer signaling to the first pattern (pattern 1), for example, the relevant configuration is indicated by the RRC signaling.

In some embodiments, the signaling (such as the RRC signaling) indicating the first pattern (pattern 1) indicates at least one of the following parameters: a first transmission period value P, a first downlink slot number dₛₗₒₜₛ, a first downlink symbol number d_{sym}, a first uplink slot number uₛₗₒₜₛ, a first uplink symbol number u_{sym}, and a first flexible symbol number. These parameters are integers greater than or equal to zero.

In some embodiments, the first transmission period value is in units of milliseconds, the first downlink slot number indicates that former dₛₗₒₜₛ slots of the first transmission period are downlink slots, the first downlink symbol number indicates that d_{sym} symbols after dₛₗₒₜₛ slots are downlink symbols, the first uplink slot number indicates that latter uₛₗₒₜₛ slots in the first transmission period are uplink slots, and the first uplink symbol number indicates that u_{sym} symbols before the uₛₗₒₜₛ slots are uplink symbols.

For example, for the first pattern (pattern 1) of a period, it includes in order from front to back: dₛₗₒₜₛ downlink slots, d_{sym} downlink symbols, zero or more than one flexible slots or symbols, u_{sym} uplink symbols, and uₛₗₒₜₛ uplink slots, wherein dₛₗₒₜₛ, d_{sym}, u_{sym} and uₛₗₒₜₛ are all integers greater than or equal to zero.

In some embodiments, the flexible slot number and/or the symbol number may or may not be indicated in the above signaling. In the case where the flexible slot number and/or the symbol number is/are not indicated, it may be deemed that other time units than the uplink time units and downlink time units in the above period are flexible slots and/or symbols, wherein the flexible slots and/or symbols are slots and/or symbols of the flexible time unit.

In some embodiments, when the first pattern is configured, a first symbol of every 20ms/P periods is aligned with a first symbol of even-numbered frames, or a first symbol of every 20ms/P period is a first symbol of even-numbered frames, wherein P is divisible by 20, and 20ms denotes two frame lengths, that is, each frame length is 10ms.

In some embodiments, for the case where the cell-common time division duplex configuration includes configuring the first pattern (pattern 1) and the second pattern (pattern 2), contents of the first pattern (pattern 1) are as described above, which shall not be repeated herein any further. And contents of pattern 2 shall be described below.

In some embodiments, the configuration of the second pattern (pattern 2) is indicated by at least one of RRC signaling, MAC layer signaling and physical layer signaling.

For example, relevant configuration is indicated by higher-layer signaling to the second pattern (pattern 2), such as RRC signaling.

In some embodiments, the signaling (such as RRC signaling) indicating the second pattern (pattern 2) indicates at least one of the following parameters: a second transmission period value P2, a second downlink slot number d_{slots,2}, a second downlink symbol number d_{sym,2}, a second uplink slot number u_{slots,2}, a second uplink symbol number u_{sym,2}, and a second flexible symbol number. And these parameters are integers greater than or equal to zero.

In some embodiments, the second transmission period value is in units of milliseconds, the second downlink slot number indicates that former dₛₗₒₜₛ slots of the second transmission period are downlink slots, the second downlink symbol number indicates that d_{sym,2} symbols after the d_{slots,2} slots are downlink symbols, the second uplink slot number indicates that latter u_{slots,2} slots of the second transmission period are uplink slots, the second uplink symbol number indicates that u_{sym,2} symbols before the u_{slots,2} slots are uplink symbols.

For example, for the second pattern (pattern 2) of a period, it includes in order from front to back: d_{slots,2} downlink slots, d_{sym,2} downlink symbols, zero or more than one flexible slots or symbols, u_{sym,2} uplink symbols, and u_{slots,2} uplink slots, wherein d_{slots,2}, d_{sym,2}, u_{sym,2} and u_{slots,2} are all integers greater than or equal to zero.

In some embodiments, the flexible slot number and/or the symbol number may or may not be indicated in the above signaling. In the case where the flexible slot number and/or the symbol number is/are not indicated, it may be deemed that other time units than the uplink time units and downlink time units in the above period are flexible slots and/or symbols, wherein the flexible slots and/or symbols are slots and/or symbols of the flexible time unit.

In some embodiments, when the first pattern (pattern 1) and the second pattern (pattern 2) are configured, a first symbol of every 20ms/(P+P₂) periods is aligned with a first symbol of even-numbered frames, or a first symbol of every 20ms/(P+P₂) period is a first symbol of even-numbered frames, wherein P+P₂ is divisible by 20, and 20ms denotes two frame lengths, that is, each frame length is 10ms.

In some embodiments, the repeater-dedicated time division duplex configuration is only configured on flexible area units of the cell-common time division duplex configuration. For example, device-dedicated uplink and downlink configuration may only be performed on the flexible area units of the cell-common time division duplex configuration, that is, only the flexible areas of the cell-common uplink and downlink TDD configuration may be changed, and the uplink and downlink areas of the cell-common uplink and downlink TDD configuration cannot be changed.

In some embodiments, the repeater-dedicated time division duplex configuration is indicated by at least one of RRC signaling, MAC layer signaling and physical layer signaling.

For example, the repeater-dedicated time division duplex configuration is indicated by higher-layer signaling, such as RRC signaling.

In some embodiments, the above signaling indicates a slot position in the period and/or symbol configuration in the slot.

For example, in the above signaling configures that all symbols in the slot are downlink symbols, or configures that all symbols in the slot are uplink symbols, or configures the number a of downlink symbols and/or the number b of uplink symbols in the slot, wherein the number of downlink symbols indicates that former a symbols in the slot are downlink symbols, and the number of uplink symbols indicates that latter b symbols in the slot are uplink symbols; where, a and b are both integers greater than or equal to zero.

For another example, if the number of downlink symbols is not configured, there are no downlink symbols in that slot; if the number of uplink symbols is not configured, there are no uplink symbols in the slot; and after the number of uplink and/or the number of downlink symbols is/are configured, remaining symbols in the slot are flexible symbols.

Wherein, the slot is a slot to which a slot position in the period indicated by the signaling corresponds.

The semi-static time division duplex configuration is described above, and the dynamic time division duplex configuration shall be described below.

In some embodiments, the dynamic time division duplex configuration is indicated by at least one of RRC signaling, MAC layer signaling and physical layer signaling.

For example, the dynamic time division duplex configuration is indicated by physical layer signaling. For example, format configuration of a slot is dynamically indicated by DCI format 2_0.

In some embodiments, the dynamic time division duplex configuration may configure the flexible time units in the semi-static time division duplex configuration. For example, corresponding slot format may be indicated to the flexible time units of the semi-static time division duplex configuration, so as to perform dynamic configuration; however, the uplink and downlink time units in the semi-static time division duplex configuration cannot be modified.

In some embodiments, a cell identifier applied by the dynamic time division duplex configuration and/or a slot format indicator (SFI) to which the dynamic time division duplex configuration corresponds and/or a slot format applied by the dynamic time division duplex configuration may be indicated by at least one of RRC signaling, MAC signaling and physical layer signaling.

In some embodiments, the slot format applied by the dynamic configuration includes: a format of a single structure, a format having a flexible time unit in a slot, a format having two flexible time units in a slot, or a format indicating that the configuration of SFI has no effect on signal and/or channel transmission of the semi-static configuration.

For example, in the format of a single structure, symbols in the slot are all uplink symbols, or symbols in the slot are all downlink symbols, or symbols in the slot are all flexible symbols.

For example, in the format having a flexible time unit in a slot, the slot includes in order from front to back: zero or more than one downlink symbols, more than one flexible symbols, and zero or more than one uplink symbols.

For example, in the format having two flexible time units in a slot, the slot includes in order from front to back: zero or more than one downlink symbols, more than one flexible symbols, zero or more than one uplink symbols, zero or more than one downlink symbols, more than one flexible symbols, and zero or more than one uplink symbols. For example, the two flexible areas are respectively located in former 7 symbols and latter 7 symbols in the slot.

In some embodiments, the format indicating that the configuration of SFI has no effect on signal and/or channel transmission of the semi-static configuration may be referred to as a 255 format, which is unable to modify the flexible areas.

In some embodiments, when one of overlapped normal cyclic prefix (CP) symbols is flexible, the repeater determines an extended cyclic prefix symbol as a flexible symbol on the flexible time unit; and/or, when a pair of overlapped regular cyclic prefix symbols includes a downlink symbol and an uplink symbol, the repeater determines the extended cyclic prefix symbol as a flexible symbol on the flexible time unit.

In some embodiments, the "overlapped normal cyclic prefix" refers to a normal cyclic prefix that overlaps with an extended cyclic prefix.

In step 301, the repeater receives the time division duplex (TDD) configuration information from the network device, hence, the repeater is able to determine the flexible time units in the time division duplex configuration. And furthermore, in step 302, the repeater determines the forwarding behavior on the first flexible time unit.

In some embodiments, the first flexible time unit includes at least a part of the flexible time units in the time division duplex configuration.

For example, the first flexible time unit is determined based on the flexible time units in the time division duplex configuration; however, the embodiments of this disclosure is not limited thereto.

For example, the first flexible time unit includes a part of the flexible time units in the time division duplex configuration, or the first flexible time unit includes all of the flexible time units, or the first flexible time unit includes a part of the flexible time units and other time domain resources, or the first flexible time unit includes all of the flexible time units and other time domain resources.

In some embodiments, the forwarding behavior includes at least one of uplink forwarding, downlink forwarding and no forwarding.

In some embodiments, the uplink forwarding includes forwarding a channel and/or a signal transmitted by the terminal equipment to the network device, and the downlink forwarding includes forwarding a channel and/or a signal transmitted by the network device to the terminal equipment.

In some embodiments, the repeater determines the forwarding behavior on the first flexible time unit, which may be that the repeater determines the forwarding behavior on the first flexible time unit according to a first indication, or may be that the repeater determines the forwarding behavior on the first flexible time unit according to a default first rule.

That is, the repeater may determine the forwarding behavior on the first flexible time unit in an indicated or default manner.

FIG. 5 is a schematic diagram of a method for determining a forwarding behavior on a first flexible time unit by the repeater of embodiment 1 of this disclosure. As shown in FIG. 5, the method includes:
step 501: determining the forwarding behavior on the first flexible time unit by the repeater according to the first indication; or,
step 502: determining the forwarding behavior on the first flexible time unit by the repeater according to the default first rule.

In some embodiments, the "default rule" refer to a predefined rule or regulation, such as a regulation in a protocol.

The manner of indication shall be described first.

In some embodiments, the first indication is configured by at least one of physical layer signaling, MAC layer signaling and RRC signaling. For example, the first indication is configured by physical layer signaling, such as a DCI format.

In some embodiments, when the repeater receives the first indication, the repeater determines to perform uplink forwarding and/or downlink forwarding on the first flexible time unit.

For example, when the repeater receives the first indication, the repeater determines the forwarding behavior on the first flexible time unit in a manner as below:
when the repeater receives the first indication, the repeater determines to, on the first flexible time unit, forward the channel and/or signal transmitted by the terminal equipment to the network device; and/or,
when the repeater receives the first indication, the repeater determines to, on the first flexible time unit, forward the channel and/or signal transmitted by the network device to a terminal equipment.

For another example, when the repeater has not received the first indication, the repeater determines the forwarding behavior on the first flexible time unit according to a default second rule, the second rule including one of the following rules:
the repeater only performs downlink forwarding on a part or all of symbols of the first flexible time unit;
the repeater only performs uplink forwarding on a part or all of symbols of the first flexible time unit;
the repeater performs downlink forwarding on former n1 symbols of the first flexible time unit, and performs uplink forwarding on latter n2 symbols of the first flexible time unit, n1+n2 being not greater than a total number of symbols of the first flexible time unit; and
the repeater performs no forwarding on the first flexible time unit.

In some embodiments, the first rule may be identical to the second rule.

For example, the first rule includes one of the following rules:
the repeater only performs downlink forwarding on a part or all of symbols of the first flexible time unit;
the repeater only performs uplink forwarding on a part or all of symbols of the first flexible time unit;
the repeater performs downlink forwarding on former n1 symbols of the first flexible time unit, and performs uplink forwarding on latter n2 symbols of the first flexible time unit, n1+n2 being not greater than a total number of symbols of the first flexible time unit; and
the repeater performs no forwarding on the first flexible time unit.

In some embodiments, the default first rule may also be different from the default second rule.

In some embodiments, in the case where the repeater determines to perform uplink forwarding and/or downlink forwarding on the first flexible time unit, as shown in FIG. 3, the method further includes:
step 303: performing uplink forwarding and/or downlink forwarding by the repeater on the first flexible time unit.

In some embodiments, in determining the forwarding behavior on the first flexible time unit, the repeater may further consider a consistency between a transmission direction indicated by the first indication received by the repeater and a second indication received by the terminal equipment served by the repeater.

In some embodiments, the repeater determines the forwarding behavior of the repeater on the first flexible time unit according to whether the direction of forwarding on the first flexible time unit indicated by the received first indication is consistent with the transmission direction on the second flexible time unit indicated by the second indication received by the terminal equipment served by the repeater.

For example, when the direction of forwarding on the first flexible time unit by the repeater indicated by the received first indication and the direction of forwarding on the second flexible time unit by the repeater indicated by the second indication received by the terminal equipment served by the repeater are consistent, the repeater performs uplink forwarding or downlink forwarding on the first flexible time unit;
and when the direction of forwarding on the first flexible time unit by the repeater indicated by the received first indication and the direction of forwarding on the second flexible time unit by the repeater indicated by the second indication received by the terminal equipment served by the repeater are inconsistent, the repeater performs no forwarding on the first flexible time unit.

In some embodiments, the second flexible time unit is determined by the time division duplex configuration of the terminal equipment, and the first flexible time unit and the second flexible time unit are identical in the time domain, that is, they are identical time domain resources.

In some embodiments, the "consistent" refers to, for example, that the downlink forwarding performed by the repeater on the first flexible time unit is consistent with reception by the terminal equipment on the second flexible time unit, and/or the uplink forwarding performed by the repeater on the first flexible time unit is consistent with the transmission by the terminal equipment on the second flexible time unit.

In some embodiments, the "not consistent" refers to, for example, that the downlink forwarding performed by the repeater on the first flexible time unit is not consistent with the transmission by the terminal equipment on the second flexible time unit, and/or the uplink forwarding performed by the repeater on the first flexible time unit is not consistent with the reception by the terminal equipment on the second flexible time unit.

Following description shall be given by way of examples.

When the repeater receives or detects the first indication indicating the repeater to perform downlink forwarding on channels or signals in a group of flexible symbols, for example,
when the repeater receives or detects a DCI format indicating the repeater to receive PDSCHs or CSI-RSs on this group of symbols and the terminal equipment served by the repeater receives or detects a DCI format indicating the terminal equipment to receive PDSCHs or CSI-RSs on this group of symbols, the repeater transmits PDSCHs or CSI-RSs received from the network device to a terminal equipment corresponding to the repeater; and/or,
when the repeater receives or detects a DCI format indicating the repeater to receive PDSCHs or CSI-RSs on this group of symbols and the terminal equipment served by the repeater does not receive or detect a DCI format indicating the terminal equipment to receive PDSCHs or CSI-RSs on this group of symbols, or the terminal equipment served by the repeater receives or detects a DCI format or an RAR UL grant or a fallbackRAR UL grant or successRAR indicating the terminal equipment to transmit PUSCHs or PUCCHs or PRACHs or SRSs on this group of symbols, the repeater does not perform downlink forwarding on this group of symbols.

When the repeater receives or detects a first indication indicating the repeater to perform uplink forwarding on channels or signals on a group of flexible symbols, for example,
when the repeater receives or detects a DCI format or an RAR UL grant or a fallbackRAR UL grant or successRAR indicating the repeater to transmit PUSCHs or PUCCHs or PRACHs or SRSs on this group of symbols and the terminal equipment served by the repeater receives or detects a DCI format or an RAR UL grant or a fallbackRAR UL grant or successRAR indicating the terminal equipment to transmit PUSCHs or PUCCHs or PRACHs or SRSs on this group of symbols, the repeater transmits PUSCHs or PUCCHs or PRACHs or SRSs received from the terminal equipment to the network device; and/or,
when the repeater receives or detects a DCI format or an RAR UL grant or a fallbackRAR UL grant or successRAR indicating the repeater to transmit PUSCHs or PUCCHs or PRACHs or SRSs on this group of symbols and the terminal equipment served by the repeater does not receive or detect a DCI format or an RAR UL grant or a fallbackRAR UL grant or successRAR indicating the terminal equipment to transmit PUSCHs or PUCCHs or PRACHs or SRSs on this group of symbols or the terminal equipment served by the repeater receives or detects a DCI format indicating the terminal equipment to receive PDSCHs or CSI-RSs on this group of symbols, the repeater does not perform uplink forwarding on this group of symbols.

In some embodiments, for symbols in the flexible area unit indicated by the cell-common TDD configuration, when the repeater-dedicated time division duplex configuration is configured, the repeater does not expect to simultaneously receive repeater-dedicated time division duplex configuration signaling configured as transmission and repeater-dedicated time division duplex configuration signaling configured as reception, so as to avoid conflicts.

As described above, the time division duplex configuration of the repeater includes semi-static time division duplex configuration and/or dynamic time division duplex configuration.

In some embodiments, for the case where the repeater is configured with the semi-static time division duplex configuration,
when the repeater is not configured to detect the dynamic time division duplex configuration and a group of symbols of a slot configured by the cell-common time division duplex configuration and the repeater-dedicated time division duplex configuration is flexible, or, when the repeater is not provided with the cell-common time division duplex configuration and the repeater-dedicated time division duplex configuration, when the repeater receives relevant indication of uplink forwarding, the repeater performs uplink forwarding; and/or, when the repeater receives relevant indication of downlink forwarding, the repeater performs downlink forwarding.

For example, when the repeater is not configured to detect dynamic time division duplex configuration, such as a PDCCH carrying DCI format 2_0, and cell-common time division duplex configuration provided for symbols in a slot and the repeater-dedicated time division duplex configuration are indicated as being flexible, or when the repeater is not provided with semi-static common configuration and dedicated configuration,
if the repeater receives or detects a corresponding indication of a DCI format, the repeater receives PDSCHs or CSI-RSs, or the repeater transmits PDSCHs or CSI-RSs received from the terminal equipment to a corresponding terminal equipment;
and if the repeater receives or detects a corresponding indication of a DCI format or an RAR UL grant or a fallbackRAR UL grant or successRAR, the repeater transmits PUSCHs or PUCCHs or PRACHs or SRSs, or the repeater transmits PUSCHs or PUCCHs or PRACHs or SRSs received from the terminal equipment to the terminal equipment.

In some embodiments, for the case where the repeater is configured with the dynamic time division duplex configuration,
when a group of symbols of a slot configured by the cell-common time division duplex configuration and the repeater-dedicated time division duplex configuration for the repeater is flexible, or, when the repeater is not provided with the cell-common time division duplex configuration and the repeater-dedicated time division duplex configuration but detects a slot format provided by the dynamic time division duplex configuration and the slot format is not a 255 format,
in a case where the repeater receives or detects a first indication indicating the repeater to perform uplink forwarding or downlink forwarding on the symbols of the slot, the repeater performs uplink forwarding or downlink forwarding on the symbols of the slot; and/or
in a case where the repeater does not receive or detect the first indication indicating the repeater to perform uplink forwarding on the symbols of the slot or the first indication indicating the repeater to perform downlink forwarding on the symbols of the slot, the repeater does not perform uplink forwarding or downlink forwarding on the symbols of the slot.

For example, when a group of symbols of a slot indicated to the repeater is indicated by the provided cell-common time division duplex configuration and the repeater-dedicated time division duplex configuration as being flexible, or, when the repeater is not provided with the cell-common time division duplex configuration and the repeater-dedicated time division duplex configuration, and the repeater detects dynamic TDD configuration, such as a format of a slot provided by DCI format 2_0 by using a slot format which is not 255,
if one or more symbols in this group of symbols are symbols in a CORESET and are configured to the repeater for performing PDCCH monitoring, only when an SFI index value in DCI format _20 indicates that the one or more symbols are downlink symbols, the repeater receives PDCCHs in the CORESET, or the repeater transmits PDCCHs in the CORESET received from the network device to a terminal equipment to which the repeater corresponds;
if the SFI index value in DCI format 2_0 indicates that this group of symbols is flexible and the repeater receives or detects a DCI format indicating the repeater to receive PDSCHs or CSI-RSs on this group of symbols, the repeater receives PDSCHs or CSI-RSs, or transmits the PDSCHs or CSI-RSs received from the network device to a terminal equipment to which the repeater corresponds;
if the SFI index value in DCI format 2_0 indicates that this group of symbols is flexible and the repeater receives or detects a DCI format or an RAR UL grant or a fallbackRAR UL grant or successRAR indicating the repeater to transmit PUSCHs or PUCCHs or PRACHs or SRSs on this group of symbols, the repeater transmits PUSCHs or PUCCHs or PRACHs or SRSs, or transmits PUSCHs or PUCCHs or PRACHs or SRSs received from the terminal equipment to the network device;
and if the SFI index value in DCI format 2_0 indicates that the group of symbols is flexible, and the repeater does not receive or detect a DCI format indicating the repeater to receive PDSCHs or CSI-RSs on this group of symbols, or does not receive or detect a DCI format or an RAR UL grant or a fallbackRAR UL grant or successRAR indicating the repeater to transmit PUSCHs or PUCCHs or PRACHs or SRSs on this group of symbols, the repeater does not transmit or receive on this group of symbols, or the repeater performs no uplink forwarding or downlink forwarding on this group of symbols.

In some embodiments, the case where the repeater is configured with the dynamic time division duplex configuration may further include:
When a group of symbols of a slot of the repeater configured by the cell-common time division duplex and the repeater-dedicated time division duplex is indicated to be flexible, or when the repeater is not provided with the cell-common time division duplex configuration and the repeater-dedicated time division duplex configuration and no slot format is provided by the dynamic time division duplex configuration, the repeater performs uplink forwarding or downlink forwarding on the symbols of the slot upon receiving the first indication.

As described above, the repeater in the embodiments of this disclosure is not only able to perform forwarding, but is also able to perform communication (also referred to as transmission) with the network device, such as performing communication with the network device via a downlink communication link and/or an uplink communication link.

In some embodiments, a relationship between the time division duplex configuration used by the repeater for communication (transmission) and the time division duplex configuration used by the repeater for forwarding needs to be taken into account. For example, a configuration relationship between communication (transmission) and forwarding of the repeater in the configured flexible area needs to be taken into account, thereby avoiding conflicts between forwarding and transmission of the repeater in the flexible area, and ensuring reliability of forwarding and transmission of the repeater.

In step 301, the repeater receives time division duplex configuration information from the network device. In some embodiments, the time division duplex configuration information indicates at least one of a downlink time unit, a flexible time unit and an uplink time unit used by the repeater in forwarding, and/or indicates at least one of a downlink time unit, a flexible time unit and an uplink time unit used by the repeater in communication.

In some embodiments, the same time division duplex configuration information may be used to indicate at least one of the downlink time units, flexible time units and uplink time units used by the repeater in forwarding and transmission, or different pieces of duplex configuration information may be used to respectively indicate at least one of the downlink time units, flexible time units and uplink time units used by the repeater in forwarding and transmission.

For example, the time division duplex configuration information indicates at least one of the downlink time unit, flexible time unit and uplink time unit used by the repeater in forwarding, and also indicates at least one of the downlink time unit, flexible time unit and uplink time unit used by the repeater in communication.

For another example, the repeater receives first time division duplex configuration information and second time division duplex configuration information, wherein the first time division duplex configuration information indicates at least one of the downlink time unit, flexible time unit and uplink time unit used by the repeater in forwarding, and the second time division duplex configuration information indicates at least one of the downlink time unit, flexible time unit and uplink time unit used by the repeater in communication.

In some embodiments, the time division duplex configuration information used for forwarding reuses (adopts) the time division duplex configuration information used for communication, or the time division duplex configuration information used for forwarding is identical to the time division duplex configuration information used for communication, or does not reuse (adopt) the time division duplex configuration information used for communication, or the time division duplex configuration information used for forwarding is different from the time division duplex configuration information used for communication.

For example, a parameter configured for the time division duplex configuration information used for forwarding is "aaabbbxxx", but "aaabbbxxx" is actually a parameter identical a parameter used for communication, or a parameter of the time division duplex configuration of the repeater used for forwarding adopts a parameter "aaabbbxxx" of the time division duplex configuration of the repeater used for communication.

In addition, "aaabbbxxx" is an example of a parameter form only, and is not a limitation on a parameter form and/or content.

For another example, the forwarding of the repeater determines a reference SCS according to signaling, and the signaling is actually signaling used by the repeater for communication.

A relationship between the time division duplex configuration used by the repeater for communication (transmission) and the time division duplex configuration used by the repeater for forwarding shall be described below in detail.

In some embodiments, the repeater receives the time division duplex configuration, which indicates the downlink forwarding time unit, uplink forwarding time unit and flexible time unit used by the repeater in forwarding. The time division duplex configuration received by the repeater adopts the time division duplex configuration used by the repeater in communication, or the time division duplex configuration received by the repeater is identical to the time division duplex configuration used by the repeater in communication.

For example, indication signaling indicating a forwarding behavior in the above flexible time unit received or detected by the repeater adopts indication signaling indicating a communication behavior in the above flexible time unit received or detected by the repeater, or indication signaling indicating a forwarding behavior in the above flexible time unit received or detected by the repeater is identical to indication signaling indicating a communication behavior in the above flexible time unit received or detected by the repeater.

For another example, the indication signaling indicating a forwarding behavior in the above flexible time unit received or detected by the repeater does not adopt the indication signaling indicating a communication behavior in the above flexible time unit received or detected by the repeater, or the indication signaling indicating a forwarding behavior in the above flexible time unit received or detected by the repeater is different from the indication signaling indicating a communication behavior in the above flexible time unit received or detected by the repeater.

In some embodiments, the repeater receives the time division duplex configuration, which indicates the downlink forwarding time unit, uplink forwarding time unit and flexible time unit used by the repeater in forwarding. The time division duplex configuration received by the repeater does not adopt the time division duplex configuration indicating to be used for communication by the repeater, or the time division duplex configuration received by the repeater is different from the time division duplex configuration indicating to be used for communication by the repeater.

For example, time division duplex configuration signaling used for forwarding received by the repeater does not adopt time division duplex configuration signaling used for communication by the repeater, or the time division duplex configuration signaling used for forwarding is different from the time division duplex configuration signaling used for communication by the repeater; and a parameter of the time division duplex configuration used for forwarding received by the repeater adopts a parameter of the time division duplex configuration used for communication by the repeater, or the parameter of the time division duplex configuration used for forwarding is identical to the parameter of the time division duplex configuration used for communication by the repeater;
wherein, for example, the indication indicating the forwarding behavior in the above flexible time unit received or detected by the repeater adopts the indication indicating the communication behavior in the above flexible time unit received or detected by the repeater, or the indication indicating the forwarding behavior in the above flexible time unit received or detected by the repeater is identical to the indication indicating the communication behavior in the above flexible time unit received or detected by the repeater. For example, an indication indicating a forwarding behavior in a first flexible time unit received or detected by the repeater and an indication indicating a communication behavior in the first flexible time unit are identical DCI formats.

For example, the time division duplex configuration signaling used for forwarding received by the repeater does not adopt the time division duplex configuration signaling used by the repeater for communication, or the time division duplex configuration signaling used for forwarding received by the repeater is different from the time division duplex configuration signaling used by the repeater for communication; and a parameter of the time division duplex configuration for forwarding received by the repeater does not adopt a parameter of the time division duplex configuration for communication used by the repeater, or the parameter of the time division duplex configuration for forwarding received by the repeater is different from the parameter of the time division duplex configuration for communication used by the repeater;
wherein, for example, the indication indicating the forwarding behavior in the above flexible time unit received or detected by the repeater does not adopt the indication indicating the communication behavior in the above flexible time unit received or detected by the repeater, or the indication indicating the forwarding behavior in the above flexible time unit received or detected by the repeater is different from the indication indicating the communication behavior in the above flexible time unit received or detected by the repeater. For example, an indication indicating a forwarding behavior in the first flexible time unit received or detected by the repeater and an indication indicating a communication behavior in the first flexible time unit are different DCI formats.

In some embodiments, a parameter of the time division duplex configuration for forwarding received by the repeater adopts a parameter of the time division duplex configuration used by the repeater for communication, or the parameter of the time division duplex configuration used by the repeater for forwarding is identical to the parameter of the time division duplex configuration used for communication.

In some embodiments, the parameter of the time division duplex configuration for forwarding received by the repeater does not adopt the parameter of the time division duplex configuration used by the repeater for communication, or the parameter of the time division duplex configuration used by the repeater for forwarding is different from the parameter of the time division duplex configuration used for communication.

In some embodiments, in a case where the forwarding and communication (transmission) behaviors of the repeater need to be taken into account, in step 302, the repeater determines the forwarding behavior and/or the communication behavior on the first flexible time unit.

In some embodiments, the communication behavior includes at least one of uplink transmission, downlink transmission and no transmission between the repeater and the network device.

For example, the uplink transmission includes transmitting channels and/or signals by the repeater to the network device, and the downlink transmission includes receiving channels and/or signals by the repeater from the network device.

In some embodiments, the downlink transmission includes at least one of detecting a sequence, demodulating, descrambling, decoding, and interpreting information, etc., and the uplink transmission includes at least one of generating information, generating a sequence, scrambling, encoding, modulating, and mapping to a time-frequency resource, etc.

In some embodiments, the repeater determines the forwarding behavior and/or the communication behavior on the first flexible time unit according to a default third rule. For example, the repeater determines whether to perform forwarding and/or communication on the first flexible time unit according to the default third rule.

As described above, the "default rule" refers to a predefined rule or regulation, such as a regulation in a protocol.

In some embodiments, the third rule includes one of the following rules:
on the first flexible time unit, the repeater performs communication (transmission) but does not perform forwarding;
on the first flexible time unit, the repeater performs forwarding but does not perform communication (transmission);
on the first flexible time unit, the repeater performs communication (transmission) and forwarding; and
on the first flexible time unit, the repeater does not perform communication (transmission) and forwarding.

In some embodiments, when forwarding may be performed but communication may not be performed on the first flexible time unit, the repeater receives first signaling, which indicates whether the repeater performs forwarding according to an indication or according to default configuration (such as identical to the configuration mode of the above first rule).

For example, 1 bit is used for indication, that is, forwarding is performed according to the default configuration when the first signaling indicates 1, and a direction of forwarding is determined according to the indication when the first signaling indicates 0.

For another example, first signaling is used to indicate that the default configuration is adopted, and when the first signaling is provided, the repeater determines the direction of forwarding on the first flexible time unit according to the default configuration, when the first signaling is not provided, the repeater determines the direction of forwarding on the first flexible time unit according to the indication.

In some embodiments, when communication may be performed but forwarding may not be performed in the first flexible time unit, the repeater receives second signaling, the second signaling indicating whether to perform communication according to the indication or according to the default configuration.

For example, 1 bit is used for indication, and communication is performed according to the default configuration when the second signaling indicates 1, and a direction of communication (a direction of transmission) is determined according to the indication when the second signaling indicates 0.

For another example, second signaling is used to indicate that the default configuration is adopted, and when the second signaling is provided, the repeater determines the direction of communication (direction of transmission) on the first flexible time unit according to the default configuration, when the second signaling is not provided, the repeater determines the direction of communication (direction of transmission) on the first flexible time unit according to the indication.

In some embodiments, when forwarding and communication may be performed in the first flexible time unit, the repeater receives the first signaling and/or the second signaling, the first signaling indicates whether the repeater performs forwarding according to the indication or according to the default configuration, and the second signaling indicates whether the repeater performs communication (transmission) according to the indication or according to the default configuration.

For example, 1 bit is used for indication, and forwarding and/or communication (transmission) is/are performed according to the default configuration when the first signaling/second signaling indicate(s) 1, the direction of forwarding and/or direction of communication (direction of transmission) is/are determined according to the indication when the signaling/second signaling indicate(s) 0.

For example, the first signaling and/or the second signaling is/are used to indicate that the default configuration is adopted, and when the first signaling and/or the second signaling is/are provided, the repeater determines the direction of forwarding and/or the direction of communication (direction of transmission) of the first flexible time unit according to the default configuration, when the first signaling and/or second signaling is/are not provided, the repeater determines the direction of forwarding and/or the direction of communication (direction of transmission) of the first flexible time unit according to the indication.

In some embodiments, the repeater may also determine the forwarding behavior and/or the communication behavior on the first flexible time unit according to a forwarding priority and a communication priority.

In some embodiments, the forwarding priority is determined based on a priority of the terminal equipment served by the repeater and/or a priority of the services forwarded by the repeater.

For example, when the forwarding priority is higher than the communication priority, the repeater determines to perform forwarding only and perform no communication on the first flexible time unit; or, the repeater may first determine to determine a forwarding time area in the first flexible time unit, and then determine a communication time area in remaining areas of the first flexible time unit.

For another example, when the communication priority is higher than the forwarding priority, the repeater determines to perform communication only and perform no forwarding on the first flexible time unit; or, the repeater may first determine to determine a communication time area in the first flexible time unit, and then determine a forwarding time area in remaining areas of the first flexible time unit.

In some embodiments, that a priority is high refers to that a level of priority is high, and that a priority is low refers to a level of priority is low.

For example, the smaller a value of a priority, the higher the (level of) priority, and the larger the value of the priority, the lower the (level of) priority.

For another example, the larger the value of the priority, the higher the (level of) priority, and the smaller the value of the priority, the lower the (level of) priority.

In some embodiments, the repeater may determine the priority of the terminal equipment served by the repeater,

In some embodiments, the repeater may also determine the priority of the forwarded services when it performs forwarding.

It can be seen from the above embodiment that by transmitting the TDD configuration information to the repeater, the repeater is able to determine the configured flexible area, and the repeater determines the forwarding behavior on the first flexible time unit, so that the forwarding of the repeater is more flexible for sudden service transmissions, and the repeater has a period of buffer time between downlink forwarding and uplink forwarding, thereby enabling the repeater to have sufficient time to process the received data and make preparation for transmitting services.

Furthermore, the configuration relationship between the transmission and forwarding of the repeater in the flexible area is also taken into account, thereby avoiding conflicts between the forwarding and transmission of the repeater in the flexible area, and ensuring reliability of the forwarding and transmission of the repeater.

### Embodiment 2

Embodiment 2 of this disclosure provides a method for configuring a repeater, applicable to a network device side. This method corresponds to the method for configuring a repeater applicable to a repeater in embodiment 1, with identical contents being not going to be repeated herein any further. For example, the method is applicable to the network device 101 in FIGs. 1 and 2.

FIG. 6 is a schematic diagram of the method for configuring a repeater of embodiment 2 of this disclosure. As shown in FIG. 6, the method includes:
step 601: transmitting time division duplex (TDD) configuration information by a network device to a repeater.

In step 601, the network device transmits the time division duplex configuration information to the repeater, for example, the network device transmits the time division duplex configuration information via the uplink communication link in FIG. 1 and FIG. 2.

In some embodiments, this time division duplex configuration is also referred to as uplink/downlink time division duplex (UL/DL TDD) configuration.

In some embodiments, a time-domain resource configured by the time division duplex configuration information includes at least one of the following time units: a downlink time unit, a flexible time unit, and an uplink time unit.

In some embodiments, the time division duplex configuration includes semi-static time division duplex configuration and/or dynamic time division duplex configuration.

In some embodiments, the semi-static time division duplex configuration is indicated by at least one of RRC signaling, MAC layer signaling and physical layer signaling.

In some embodiments, the dynamic time division duplex configuration is indicated by at least one of RRC signaling, MAC layer signaling and physical layer signaling.

In some embodiments, the semi-static time division duplex configuration includes cell-common time division duplex configuration and/or repeater-dedicated time division duplex configuration.

In some embodiments, the cell-common time division duplex configuration includes configuring a first pattern (pattern 1); or, the cell-common time division duplex configuration includes configuring a first pattern (pattern 1) and a second pattern (pattern 2).

Reference may be made to what is described in embodiment 1 for contents and a mode of configuration of the time division duplex configuration information, which shall not be repeated herein any further.

In some embodiments, as shown in FIG. 6, the method further includes:
step 602: transmitting a first indication for determining a forwarding behavior by the network device to the repeater.

Hence, the repeater may determine the forwarding behavior on the first flexible time unit according to the first indication.

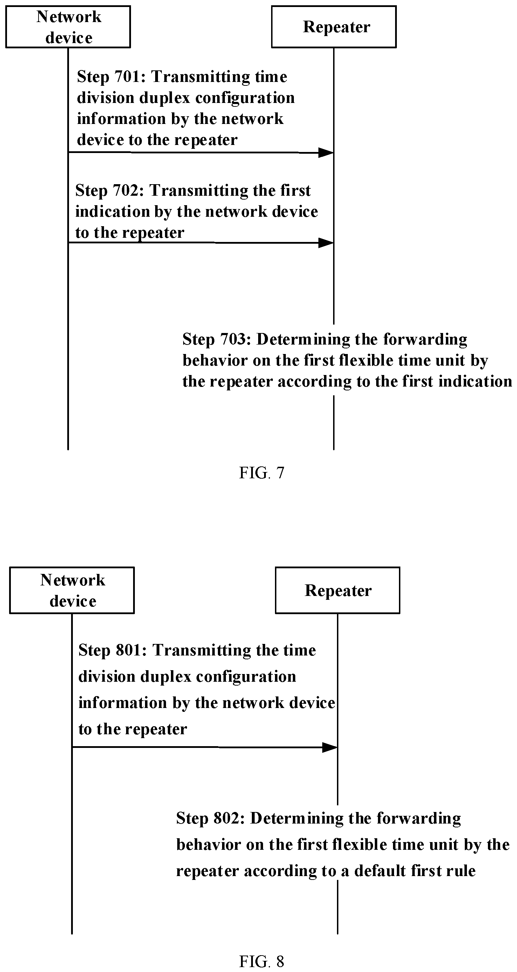

FIG. 7 is an interaction graph of the method for configuring of embodiment 2 of this disclosure between the network device and the repeater. As shown in FIG. 7, the method includes:
step 701: transmitting time division duplex configuration information by the network device to the repeater;
step 702: transmitting the first indication by the network device to the repeater; and
step 703: determining the forwarding behavior on the first flexible time unit by the repeater according to the first indication.

FIG. 8 is another interaction graph of the method for configuring of embodiment 2 of this disclosure between the network device and the repeater. As shown in FIG. 8, the method includes:
step 801: transmitting the time division duplex configuration information by the network device to the repeater; and
step 802: determining the forwarding behavior on the first flexible time unit by the repeater according to a default first rule.

Reference may be made to what is described in embodiment 1 for contents of the first indication and first rule, which shall not be repeated herein any further.

It can be seen from the above embodiment that by transmitting the TDD configuration information to the repeater, the repeater is able to determine the configured flexible area, and the repeater determines the forwarding behavior on the first flexible time unit, so that the forwarding of the repeater is more flexible for sudden service transmissions, and the repeater has a period of buffer time between downlink forwarding and uplink forwarding, thereby enabling the repeater to have sufficient time to process the received data and make preparation for transmitting services.

### Embodiment 3

Embodiment 3 of this disclosure provides a device for configuring a repeater, provided in a repeater. As a principle of the device for solving problems is similar to that of the method in embodiment 1, reference may be made to the implementation of the method described in embodiment 1 for implementation of the device, with identical or related contents being not going to be described herein any further.

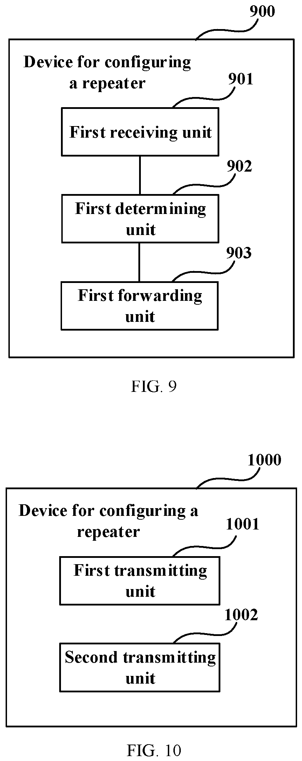

FIG. 9 is a schematic diagram of the device for configuring a repeater of embodiment 3 of this disclosure. As shown in FIG. 9, a device 900 for configuring a repeater includes:
a first receiving unit 901 configured to receive time division duplex (TDD) configuration information from a network device; and
a first determining unit 902 configured to determine a forwarding behavior on a first flexible time unit.

In some embodiments, a time-domain resource configured by the time division duplex configuration information includes at least one of the following time units: a downlink time unit, a flexible time unit, and an uplink time unit.

In some embodiments, the first flexible time unit includes at least a part of the flexible time unit in the time division duplex configuration.

In some embodiments, the time division duplex configuration includes semi-static time division duplex configuration and/or dynamic time division duplex configuration.

In some embodiments, the semi-static time division duplex configuration is indicated by at least one of RRC signaling, MAC layer signaling and physical layer signaling, and/or, the dynamic time division duplex configuration is indicated by at least one of RRC signaling, MAC layer signaling and physical layer signaling.

In some embodiments, the semi-static time division duplex configuration includes cell-common time division duplex configuration and/or repeater-dedicated time division duplex configuration.

**In** some embodiments, the cell-common time division duplex configuration includes configuring a first pattern (pattern 1); or, the cell-common time division duplex configuration includes configuring a first pattern (pattern 1) and a second pattern (pattern 2).

**In** some embodiments, the repeater-dedicated time division duplex configuration is configured only on a flexible area unit of the cell-common time division duplex configuration.

**In** some embodiments, when one of overlapped normal cyclic prefix (CP) symbols is flexible, the repeater determines an extended cyclic prefix symbol as a flexible symbol on the flexible time unit; and/or, when a pair of overlapped regular cyclic prefix symbols comprises a downlink symbol and an uplink symbol, the repeater determines the extended cyclic prefix symbol as a flexible symbol on the flexible time unit.

**In** some embodiments, the forwarding behavior includes at least one of uplink forwarding, downlink forwarding and no forwarding, the uplink forwarding including forwarding a channel and/or a signal transmitted by a terminal equipment to the network device, and the downlink forwarding including forwarding a channel and/or a signal transmitted by the network device to a terminal equipment.

**In** some embodiments, the first determining unit 902 determines the forwarding behavior on the first flexible time unit according to a first indication, or the first determining unit 902 determines the forwarding behavior on the first flexible time unit according to a default first rule.

In some embodiments, the first indication is configured via at least one of physical layer signaling, MAC layer signaling and RRC signaling.

In some embodiments, when the repeater receives the first indication, the first determining unit 902 determines the forwarding behavior on the first flexible time unit in a manner as below:
when the repeater receives the first indication, the first indication indicates the repeater to perform uplink forwarding on the first flexible time unit, and the first determining unit determines to, on the first flexible time unit, forward the channel and/or signal transmitted by a terminal equipment to the network device; and/or,
when the repeater receives the first indication, the first indication indicates the repeater to perform downlink forwarding on the first flexible time unit, and the first determining unit determines to, on the first flexible time unit, forward the channel and/or signal transmitted by the network device to a terminal equipment.

In some embodiments, when the repeater has not received the first indication, the first determining unit 902 determines the forwarding behavior on the first flexible time unit according to a default second rule, the second rule including one of the following rules:
the repeater only performs downlink forwarding on a part or all of symbols of the first flexible time unit;
the repeater only performs uplink forwarding on a part or all of symbols of the first flexible time unit;
the repeater performs downlink forwarding on former n1 symbols of the first flexible time unit, and performs uplink forwarding on latter n2 symbols of the first flexible time unit, n1+n2 being not greater than a total number of symbols of the first flexible time unit; and
the repeater performs no forwarding on the first flexible time unit.

In some embodiments, the first rule includes one of the following rules:
the repeater only performs downlink forwarding on a part or all of symbols of the first flexible time unit;
the repeater only performs uplink forwarding on a part or all of symbols of the first flexible time unit;
the repeater performs downlink forwarding on former n1 symbols of the first flexible time unit, and performs uplink forwarding on latter n2 symbols of the first flexible time unit, n1+n2 being not greater than a total number of symbols of the first flexible time unit; and
the repeater performs no forwarding on the first flexible time unit.

In some embodiments, in the case where the first determining unit 902 determines to perform uplink forwarding and/or downlink forwarding on the first flexible time unit, as shown in FIG. 9, the device 900 for configuring a repeater further includes:
a first forwarding unit 903 configured to perform uplink forwarding and/or downlink forwarding on the first flexible time unit.

In some embodiments, the first determining unit 902 determines the forwarding behavior of the repeater on the first flexible time unit according to whether a direction of forwarding on the first flexible time unit by the repeater indicated by a received first indication and a direction of forwarding on a second flexible time unit by the repeater indicated by a second indication received by a terminal equipment served by the repeater are consistent.

In some embodiments, when the direction of forwarding on the first flexible time unit by the repeater indicated by the received first indication and the direction of forwarding on the second flexible time unit by the repeater indicated by the second indication received by the terminal equipment served by the repeater are consistent, the repeater performs uplink forwarding or downlink forwarding on the first flexible time unit; and when the direction of forwarding on the first flexible time unit by the repeater indicated by the received first indication and the direction of forwarding on the second flexible time unit by the repeater indicated by the second indication received by the terminal equipment served by the repeater are inconsistent, the repeater performs no forwarding on the first flexible time unit.

In some embodiments, for symbols in the flexible area unit indicated by the cell-common TDD configuration, when the repeater-dedicated time division duplex configuration is configured, the repeater does not expect to simultaneously receive repeater-dedicated time division duplex configuration signaling configured as transmission and repeater-dedicated time division duplex configuration signaling configured as reception.

In some embodiments, for a case where the repeater is configured with the semi-static time division duplex configuration,
when the repeater is not configured to detect the dynamic time division duplex configuration and a group of symbols of a slot configured by the cell-common time division duplex configuration and the repeater-dedicated time division duplex configuration is flexible, or, when the repeater is not provided with the cell-common time division duplex configuration and the repeater-dedicated time division duplex configuration,
when the repeater receives relevant indication of uplink forwarding, the repeater performs uplink forwarding; and/or,
when the repeater receives relevant indication of downlink forwarding, the repeater performs downlink forwarding.

In some embodiments, for a case where the repeater is configured with the dynamic time division duplex configuration,
when a group of symbols of a slot configured by the cell-common time division duplex configuration and the repeater-dedicated time division duplex configuration is flexible, or, when the repeater is not provided with the cell-common time division duplex configuration and the repeater-dedicated time division duplex configuration but detects a slot format provided by the dynamic time division duplex configuration and the slot format is not a 255 format,
in a case where the repeater receives or detects a first indication indicating the repeater to perform uplink forwarding or downlink forwarding on the symbols of the slot, the repeater performs uplink forwarding or downlink forwarding on the symbols of the slot; and/or
in a case where the repeater does not receive or detect the first indication indicating the repeater to perform uplink forwarding on the symbols of the slot or the first indication indicating the repeater to perform downlink forwarding on the symbols of the slot, the repeater does not perform uplink forwarding or downlink forwarding on the symbols of the slot.

In some embodiments, for a case where the repeater is configured with the dynamic time division duplex configuration,
when a group of symbols of a slot configured by the cell-common time division duplex configuration and the repeater-dedicated time division duplex configuration is flexible, or, when the repeater is not provided with the cell-common time division duplex configuration and the repeater-dedicated time division duplex configuration and the dynamic time division duplex configuration provides no slot format,
in a case where the repeater receives the first indication, the repeater performs uplink forwarding or downlink forwarding on the symbols of the slot.

In some embodiments, the time division duplex configuration information indicates at least one of a downlink time unit, a flexible time unit and an uplink time unit used by the repeater in forwarding, and/or indicates at least one of a downlink time unit, a flexible time unit and an uplink time unit used by the repeater in communication.

In some embodiments, the time division duplex configuration information indicates at least one of the downlink time units, flexible time units and uplink time units used by the repeater in forwarding, and the time division duplex configuration information further indicates at least one of the downlink time units, flexible time units and uplink time units used by the repeater in communication, or
the repeater receives first time division duplex configuration information and second time division duplex configuration information respectively, wherein the first time division duplex configuration information indicates at least one of the downlink time unit, flexible time unit and uplink time unit used by the repeater in forwarding, and the second time division duplex configuration information indicates at least one of the downlink time unit, flexible time unit and uplink time unit used by the repeater in communication.

In some embodiments, the first determining unit 902 determines the forwarding behavior and/or a communication behavior on the first flexible time unit.

In some embodiments, the communication behavior includes at least one of uplink transmission, downlink transmission and no transmission between the repeater and the network device.

In some embodiments, the uplink transmission includes transmitting channels and/or signals by the repeater to the network device, and the downlink transmission includes receiving channels and/or signals by the repeater from the network device.

In some embodiments, the first determining unit 902 determines the forwarding behavior and/or the communication behavior on the first flexible time unit according to a default third rule.

In some embodiments, the third rule includes one of the following rules:
on the first flexible time unit, the repeater performs communication but does not perform forwarding;
on the first flexible time unit, the repeater performs forwarding but does not perform communication;
on the first flexible time unit, the repeater performs communication and forwarding; and
on the first flexible time unit, the repeater does not perform communication and forwarding.

In some embodiments, the first determining unit determines the forwarding behavior and/or the communication behavior on the first flexible time unit according to a forwarding priority and a communication priority.

In some embodiments, when the forwarding priority is higher than the communication priority,
the first determining unit 902 determines that only forwarding is performed on the first flexible time unit and no communication is performed; or,
the first determining unit 902 determines that the repeater determines forwarding time area in the first flexible time unit first and then determines a communication time area in remaining areas of the first flexible time unit.

In some embodiments, when the communication priority is higher than the forwarding priority,
the first determining unit 902 determines that only communication is performed on the first flexible time unit and no forwarding is performed; or,
the first determining unit 902 determines to determine the communication time area in the first flexible time unit first, and then determine the forwarding time area in remaining areas of the first flexible time unit.

Reference may be made to relevant steps in embodiment 1 for functions and contents of the above units, which shall not be repeated herein any further.

It can be seen from the above embodiment that by transmitting the TDD configuration information to the repeater, the repeater is able to determine the configured flexible area, and the repeater determines the forwarding behavior on the first flexible time unit, so that the forwarding of the repeater is more flexible for sudden service transmissions, and the repeater has a period of buffer time between downlink forwarding and uplink forwarding, thereby enabling the repeater to have sufficient time to process the received data and make preparation for transmitting services.

Furthermore, the configuration relationship between the transmission and forwarding of the repeater in the flexible area is also taken into account, thereby avoiding conflicts between the forwarding and transmission of the repeater in the flexible area, and ensuring reliability of the forwarding and transmission of the repeater.

### Embodiment 4

Embodiment 4 of this disclosure provides a device for configuring a repeater, applicable to a network device side. As a principle of the device for solving problems is similar to that of the method in embodiment 2, reference may be made to the implementation of the method described in embodiment 2 for implementation of the device, with identical or related contents being not going to be described herein any further.

FIG. 10 is a schematic diagram of the device for configuring a repeater of embodiment 4 of this disclosure. As shown in FIG. 10, a device 1000 for configuring a repeater includes:
a first transmitting unit 1001 configured to transmit time division duplex (TDD) configuration information to a repeater.

In some embodiments, as shown in FIG. 10, the device 1000 for configuring a repeater further includes:
a second transmitting unit 1002 configured to transmit a first indication used for determining a forwarding behavior to the repeater.

Reference may be made to relevant steps in embodiment 2 for functions and contents of the above units, which shall not be repeated herein any further.

It can be seen from the above embodiment that by transmitting the TDD configuration information to the repeater, the repeater is able to determine the configured flexible area, and the repeater determines the forwarding behavior on the first flexible time unit, so that the forwarding of the repeater is more flexible for sudden service transmissions, and the repeater has a period of buffer time between downlink forwarding and uplink forwarding, thereby enabling the repeater to have sufficient time to process the received data and make preparation for transmitting services.

### Embodiment 5

Embodiment 5 of this disclosure provides a repeater, including the device for configuring a repeater as described in embodiment 3.

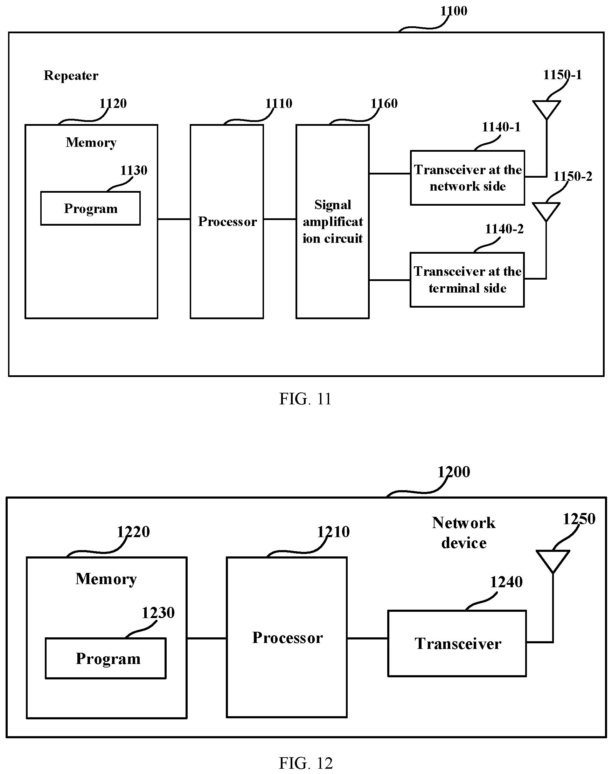

FIG. 11 is a block diagram of a systematic structure of repeater of Embodiment 5 of this disclosure. As shown in FIG. 11, a repeater 1100 may include a processor 1110 and a memory 1120, the memory 1120 being coupled to the processor 1110, wherein, the memory 1120 may store various data, and furthermore, it may store a program 1130 for information processing, and executes the program 1130 under control of the processor 1110. It should be noted that this figure is illustrative only, and other types of structures may also be used, so as to supplement or replace this structure and achieve a telecommunications function or other functions.

In one implementation, the functions of the device for configuring a repeater may be integrated into the processor 1110. Wherein, the processor 1110 may be configured to: receive time division duplex (TDD) configuration information from a network device; and determine a forwarding behavior on a first flexible time unit.

In another implementation, the device for configuring a repeater and the processor 1110 may be configured separately; for example, the device for configuring a repeater may be configured as a chip connected to the processor 1110, and the functions of the device for configuring a repeater are executed under control of the processor 1110.

As shown in FIG. 11, the repeater 1100 may further include a transceiver 1140-1 at the network side and an antenna 1150-1 at the network side, a transceiver 1140-2 at the terminal side and an antenna 1150-2 at the terminal side, and a signal amplification circuit 1160, etc. Wherein, functions of the above components are similar to those in the related art, and shall not be described herein any further. It should be noted that the repeater 1100 does not necessarily include all the parts shown in FIG. 11. Furthermore, the repeater 1100 may include parts not shown in FIG. 11, and the related art may be referred to.

As shown in FIG. 11, the processor 1110 is sometimes referred to as a controller or an operational control, which may include a microprocessor or other processor devices and/or logic devices. The processor 1110 receives input and controls operations of components of the repeater 1100.

Wherein, the memory 1120 may be, for example, one or more of a buffer memory, a flash memory, a hard drive, a mobile medium, a volatile memory, a nonvolatile memory, or other suitable devices, which may store various data, etc., and furthermore, store programs executing related information. And the processor 1110 may execute programs stored in the memory 1120, so as to realize information storage or processing, etc. Functions of other parts are similar to those of the related art, which shall not be described herein any further.

The parts of the repeater 1100 may be realized by specific hardware, firmware, software, or any combination thereof, without departing from the scope of this disclosure.

It can be seen from the above embodiment that by transmitting the TDD configuration information to the repeater, the repeater is able to determine the configured flexible area, and the repeater determines the forwarding behavior on the first flexible time unit, so that the forwarding of the repeater is more flexible for sudden service transmissions, and the repeater has a period of buffer time between downlink forwarding and uplink forwarding, thereby enabling the repeater to have sufficient time to process the received data and make preparation for transmitting services.

### Embodiment 6

The embodiments of this disclosure provide a network device, including the device for configuring a repeater as described in embodiment 4.

FIG. 12 is a schematic diagram of a systematic structure of the network device of embodiment 6 of this disclosure. As shown in FIG. 12, a network device 1200 may include a processor 1210 and a memory 1220, the memory 1220 being coupled to the processor 1210. Wherein, the memory 1220 may store various data, and furthermore, it may store a program 1230 for data processing, and execute the program 1230 under control of the processor 1210, so as to receive various information transmitted by a repeater, and transmit various information to the repeater.

In one implementation, the functions of the device for configuring a repeater may be integrated into the processor 1210. Wherein, the processor 1210 may be configured to: transmit time division duplex (TDD) configuration information to a repeater.

Furthermore, as shown in FIG. 12, the network device 1200 may include a transceiver 1240, and an antenna 1250, etc. Wherein, functions of the above components are similar to those in the related art, and shall not be described herein any further. It should be noted that the network device 1200 does not necessarily include all the parts shown in FIG. 12. Furthermore, the network device 1200 may include parts not shown in FIG. 12, and the related art may be referred to.

It can be seen from the above embodiment that by transmitting the TDD configuration information to the repeater, the repeater is able to determine the configured flexible area, and the repeater determines the forwarding behavior on the first flexible time unit, so that the forwarding of the repeater is more flexible for sudden service transmissions, and the repeater has a period of buffer time between downlink forwarding and uplink forwarding, thereby enabling the repeater to have sufficient time to process the received data and make preparation for transmitting services.

### Embodiment 7

The embodiments of this disclosure provide a communication system, including the repeater described in embodiment 5 and/or the network device described in embodiment 6.

For example, reference may be made to FIGs. 1 and 2 for a structure of the communication system.

As shown in FIG. 1, the communication system 100 includes the network device 101, the terminal equipment 102 and the repeater 103. The repeater 103 may be identical to the repeater described in embodiment 5, and the network device 101 may be identical to the network device described in embodiment 6, with repeated parts being not going to be described herein any further.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 9 may either correspond to software modules of procedures of a computer program, or correspond to hardware modules. Such software modules may respectively correspond to the steps shown in FIG. 3. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIG. 9 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIG. 9 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the principle of this disclosure, and such variants and modifications fall within the scope of this disclosure.

As to the implementations including the above embodiments, following supplements are further disclosed.

### First group of supplements

1. A device for configuring a repeater, the device being provided in the repeater, and the device including:
   a first receiving unit configured to receive time division duplex (TDD) configuration information from a network device; and
   a first determining unit configured to determine a forwarding behavior on a first flexible time unit.
2. The device according to supplement 1, wherein,
   a time-domain resource configured by the time division duplex configuration information includes at least one of the following time units: a downlink time unit, a flexible time unit, and an uplink time unit.
3. The device according to supplement 2, wherein,
   the first flexible time unit includes at least a part of the flexible time unit in the time division duplex configuration.
4. The device according to any one of supplements 1-3, wherein,
   the time division duplex configuration includes semi-static time division duplex configuration and/or dynamic time division duplex configuration.
5. The device according to supplement 4, wherein,
   the semi-static time division duplex configuration is indicated by at least one of RRC signaling, MAC layer signaling and physical layer signaling, and/or,
   the dynamic time division duplex configuration is indicated by at least one of RRC signaling, MAC layer signaling and physical layer signaling.
6. The device according to supplement 4 or 5, wherein,
   the semi-static time division duplex configuration includes cell-common time division duplex configuration and/or repeater-dedicated time division duplex configuration.
7. The device according to supplement 6, wherein,
   the cell-common time division duplex configuration includes configuring a first pattern (pattern 1); or,
   the cell-common time division duplex configuration includes configuring a first pattern (pattern 1) and a second pattern (pattern 2).
8. The device according to supplement 5, wherein,
   the repeater-dedicated time division duplex configuration is configured only on a flexible area unit of the cell-common time division duplex configuration.
9. The device according to supplement 1, wherein,
   when one of overlapped normal cyclic prefix (CP) symbols is flexible, the repeater determines an extended cyclic prefix symbol as a flexible symbol on the flexible time unit; and/or,
   when a pair of overlapped regular cyclic prefix symbols comprises a downlink symbol and an uplink symbol, the repeater determines the extended cyclic prefix symbol as a flexible symbol on the flexible time unit.
10. The device according to any one of supplements 1-9, wherein,
   the forwarding behavior includes at least one of uplink forwarding, downlink forwarding and no forwarding,
   the uplink forwarding including forwarding a channel and/or a signal transmitted by a terminal equipment to the network device,
   and the downlink forwarding including forwarding a channel and/or a signal transmitted by the network device to a terminal equipment.
11. The device according to any one of supplements 1-10, wherein,
   the first determining unit determines the forwarding behavior on the first flexible time unit according to a first indication, or,
   the first determining unit determines the forwarding behavior on the first flexible time unit according to a default first rule.
12. The device according to supplement 11, wherein,
   the first indication is configured via at least one of physical layer signaling, MAC layer signaling and RRC signaling.
13. The device according to supplement 11 or 12, wherein,
   when the repeater receives the first indication, the first determining unit determines the forwarding behavior on the first flexible time unit in a manner as below:
   when the repeater receives the first indication, the first indication indicates the repeater to perform uplink forwarding on the first flexible time unit, and the first determining unit determines to, on the first flexible time unit, forward the channel and/or signal transmitted by a terminal equipment to the network device; and/or,
   when the repeater receives the first indication, the first indication indicates the repeater to perform downlink forwarding on the first flexible time unit, and the first determining unit determines to, on the first flexible time unit, forward the channel and/or signal transmitted by the network device to a terminal equipment.
14. The device according to supplement 11 or 12, wherein,
   when the repeater has not received the first indication, the first determining unit determines the forwarding behavior on the first flexible time unit according to a default second rule, the second rule including one of the following rules:
   the repeater only performs downlink forwarding on a part or all of symbols of the first flexible time unit;
   the repeater only performs uplink forwarding on a part or all of symbols of the first flexible time unit;
   the repeater performs downlink forwarding on former n1 symbols of the first flexible time unit, and performs uplink forwarding on latter n2 symbols of the first flexible time unit, n1+n2 being not greater than a total number of symbols of the first flexible time unit; and
   the repeater performs no forwarding on the first flexible time unit.
15. The device according to supplement 11, wherein the first rule includes one of the following rules:
   the repeater only performs downlink forwarding on a part or all of symbols of the first flexible time unit;
   the repeater only performs uplink forwarding on a part or all of symbols of the first flexible time unit;
   the repeater performs downlink forwarding on former n1 symbols of the first flexible time unit, and performs uplink forwarding on latter n2 symbols of the first flexible time unit, n1+n2 being not greater than a total number of symbols of the first flexible time unit; and
   the repeater performs no forwarding on the first flexible time unit.
16. The device according to any one of supplements 1-15, wherein,
   the first determining unit determines the forwarding behavior of the repeater on the first flexible time unit according to whether a direction of forwarding on the first flexible time unit by the repeater indicated by a received first indication and a direction of forwarding on a second flexible time unit by the repeater indicated by a second indication received by a terminal equipment served by the repeater are consistent.
17. The device according to supplement 16, wherein,
   when the direction of forwarding on the first flexible time unit by the repeater indicated by the received first indication and the direction of forwarding on the second flexible time unit by the repeater indicated by the second indication received by the terminal equipment served by the repeater are consistent, the repeater performs uplink forwarding or downlink forwarding on the first flexible time unit;
   and when the direction of forwarding on the first flexible time unit by the repeater indicated by the received first indication and the direction of forwarding on the second flexible time unit by the repeater indicated by the second indication received by the terminal equipment served by the repeater are inconsistent, the repeater performs no forwarding on the first flexible time unit.
18. The device according to any one of supplements 5-17, wherein,
   for symbols in the flexible area unit indicated by the cell-common TDD configuration, when the repeater-dedicated time division duplex configuration is configured, the repeater does not expect to simultaneously receive repeater-dedicated time division duplex configuration signaling configured as transmission and repeater-dedicated time division duplex configuration signaling configured as reception.
19. The device according to any one of supplements 5-18, wherein,
   for a case where the repeater is configured with the semi-static time division duplex configuration,
   when the repeater is not configured to detect the dynamic time division duplex configuration and a group of symbols of a slot configured by the cell-common time division duplex configuration and the repeater-dedicated time division duplex configuration is flexible, or, when the repeater is not provided with the cell-common time division duplex configuration and the repeater-dedicated time division duplex configuration,
   when the repeater receives relevant indication of uplink forwarding, the repeater performs uplink forwarding; and/or,
   when the repeater receives relevant indication of downlink forwarding, the repeater performs downlink forwarding.
20. The device according to any one of supplements 5-19, wherein,
   for a case where the repeater is configured with the dynamic time division duplex configuration,
   when a group of symbols of a slot configured by the cell-common time division duplex configuration and the repeater-dedicated time division duplex configuration is flexible, or, when the repeater is not provided with the cell-common time division duplex configuration and the repeater-dedicated time division duplex configuration but detects a slot format provided by the dynamic time division duplex configuration and the slot format is not a 255 format,
   in a case where the repeater receives or detects a first indication indicating the repeater to perform uplink forwarding or downlink forwarding on the symbols of the slot, the repeater performs uplink forwarding or downlink forwarding on the symbols of the slot; and/or
   in a case where the repeater does not receive or detect the first indication indicating the repeater to perform uplink forwarding on the symbols of the slot or the first indication indicating the repeater to perform downlink forwarding on the symbols of the slot, the repeater does not perform uplink forwarding or downlink forwarding on the symbols of the slot.
21. The device according to any one of supplements 5-20, wherein,
   for a case where the repeater is configured with the dynamic time division duplex configuration,
   when a group of symbols of a slot configured by the cell-common time division duplex configuration and the repeater-dedicated time division duplex configuration is flexible, or, when the repeater is not provided with the cell-common time division duplex configuration and the repeater-dedicated time division duplex configuration and the dynamic time division duplex configuration provides no slot format,
   in a case where the repeater receives the first indication, the repeater performs uplink forwarding or downlink forwarding on the symbols of the slot.
22. The device according to any one of supplements 1-21, wherein,
   the time division duplex configuration information indicates at least one of a downlink time unit, a flexible time unit and an uplink time unit used by the repeater in forwarding, and/or indicates at least one of a downlink time unit, a flexible time unit and an uplink time unit used by the repeater in communication.
23. The device according to supplement 22, wherein,
   the time division duplex configuration information indicates at least one of the downlink time units, flexible time units and uplink time units used by the repeater in forwarding, and the time division duplex configuration information indicates at least one of the downlink time units, flexible time units and uplink time units used by the repeater in communication, or
   the repeater receives first time division duplex configuration information and second time division duplex configuration information respectively, wherein the first time division duplex configuration information indicates at least one of the downlink time unit, flexible time unit and uplink time unit used by the repeater in forwarding, and the second time division duplex configuration information indicates at least one of the downlink time unit, flexible time unit and uplink time unit used by the repeater in communication.
24. The device according to supplement 22 or 23, wherein,
   the first determining unit determines the forwarding behavior and/or a communication behavior on the first flexible time unit.
25. The device according to supplement 24, wherein,
   the communication behavior includes at least one of uplink transmission, downlink transmission and no transmission between the repeater and the network device.
26. The device according to supplement 25, wherein,
   the uplink transmission includes transmitting channels and/or signals by the repeater to the network device,
   and the downlink transmission includes receiving channels and/or signals by the repeater from the network device.
27. The device according to any one of supplements 24-26, wherein,
   the first determining unit determines the forwarding behavior and/or the communication behavior on the first flexible time unit according to a default third rule.
28. The device according to supplement 27, wherein the third rule includes one of the following rules:
   on the first flexible time unit, the repeater performs communication but does not perform forwarding;
   on the first flexible time unit, the repeater performs forwarding but does not perform communication;
   on the first flexible time unit, the repeater performs communication and forwarding; and
   on the first flexible time unit, the repeater does not perform communication and forwarding.
29. The device according to any one of supplements 24-26, wherein,
   the first determining unit determines the forwarding behavior and/or the communication behavior on the first flexible time unit according to a forwarding priority and a communication priority.
30. The device according to supplement 29, wherein,
   the forwarding priority is determined based on a priority of the terminal equipment served by the repeater and/or a priority of the services forwarded by the repeater.
31. The device according to supplement 29 or 30, wherein,
   when the forwarding priority is higher than the communication priority,
   the first determining unit determines that only forwarding is performed on the first flexible time unit and no communication is performed; or,
   the first determining unit determines that the repeater determines forwarding time area in the first flexible time unit first and then determines a communication time area in remaining areas of the first flexible time unit.
32. The device according to supplement 29 or 30, wherein,
   when the communication priority is higher than the forwarding priority,
   the first determining unit determines that only communication is performed on the first flexible time unit and no forwarding is performed; or,
   the first determining unit determines to determine the communication time area in the first flexible time unit first, and then determine the forwarding time area in remaining areas of the first flexible time unit.
33. A device for configuring a repeater, the device being provided in a network device, and the device including:
   a first transmitting unit configured to transmit time division duplex (TDD) configuration information to a repeater.
34. The device according to supplement 33, wherein the device further includes:
   a second transmitting unit configured to transmit a first indication used for determining a forwarding behavior to the repeater.
35. A repeater, including the device as described in any one of supplements 1-32.
36. A network device, including the device as described in supplements 33 or 34.
37. A communication system, including the repeater as described in supplement 35 and/or the device as described in supplement 36.

### Second group of supplements

1. A method for configuring a repeater, the method including:
   receiving time division duplex (TDD) configuration information by a repeater from a network device; and
   determining a forwarding behavior on a first flexible time unit by the repeater.
2. The method according to supplement 1, wherein,
   a time-domain resource configured by the time division duplex configuration information includes at least one of the following time units: a downlink time unit, a flexible time unit, and an uplink time unit.
3. The method according to supplement 2, wherein,
   the first flexible time unit includes at least a part of the flexible time unit in the time division duplex configuration.
4. The method according to any one of supplements 1-3, wherein,
   the time division duplex configuration includes semi-static time division duplex configuration and/or dynamic time division duplex configuration.
5. The method according to supplement 4, wherein,
   the semi-static time division duplex configuration is indicated by at least one of RRC signaling, MAC layer signaling and physical layer signaling, and/or,
   the dynamic time division duplex configuration is indicated by at least one of RRC signaling, MAC layer signaling and physical layer signaling.
6. The method according to supplement 4 or 5, wherein,
   the semi-static time division duplex configuration includes cell-common time division duplex configuration and/or repeater-dedicated time division duplex configuration.
7. The method according to supplement 6, wherein,
   the cell-common time division duplex configuration includes configuring a first pattern (pattern 1); or,
   the cell-common time division duplex configuration includes configuring a first pattern (pattern 1) and a second pattern (pattern 2).
8. The method according to supplement 5, wherein,
   the repeater-dedicated time division duplex configuration is configured only on a flexible area unit of the cell-common time division duplex configuration.
9. The method according to supplement 1, wherein,
   when one of overlapped normal cyclic prefix (CP) symbols is flexible, the repeater determines an extended cyclic prefix symbol as a flexible symbol on the flexible time unit; and/or,
   when a pair of overlapped regular cyclic prefix symbols comprises a downlink symbol and an uplink symbol, the repeater determines the extended cyclic prefix symbol as a flexible symbol on the flexible time unit.
10. The method according to any one of supplements 1-9, wherein,
   the forwarding behavior includes at least one of uplink forwarding, downlink forwarding and no forwarding,
   the uplink forwarding including forwarding a channel and/or a signal transmitted by a terminal equipment to the network device,
   and the downlink forwarding including forwarding a channel and/or a signal transmitted by the network device to a terminal equipment.
11. The method according to any one of supplements 1-10, wherein the determining a forwarding behavior on a first flexible time unit by the repeater includes:
   determining the forwarding behavior on the first flexible time unit by the repeater according to a first indication, or,
   determining the forwarding behavior on the first flexible time unit by the repeater according to a default first rule.
12. The method according to supplement 11, wherein,
   the first indication is configured via at least one of physical layer signaling, MAC layer signaling and RRC signaling.
13. The method according to supplement 11 or 12, wherein the determining the forwarding behavior on the first flexible time unit by the repeater according to a first indication includes:
   when the repeater receives the first indication, determining the forwarding behavior on the first flexible time unit by the repeater in a manner as below:
   when the repeater receives the first indication, the first indication indicates the repeater to perform uplink forwarding on the first flexible time unit, and the first determining unit determines to, on the first flexible time unit, forward the channel and/or signal transmitted by a terminal equipment to the network device; and/or,
   when the repeater receives the first indication, the first indication indicates the repeater to perform downlink forwarding on the first flexible time unit, and the first determining unit determines to, on the first flexible time unit, forward the channel and/or signal transmitted by the network device to a terminal equipment.
14. The method according to supplement 11 or 12, wherein the determining the forwarding behavior on the first flexible time unit by the repeater according to a first indication includes:
   when the repeater has not received the first indication, determining the forwarding behavior on the first flexible time unit by the repeater according to a default second rule, the second rule including one of the following rules:
   the repeater only performs downlink forwarding on a part or all of symbols of the first flexible time unit;
   the repeater only performs uplink forwarding on a part or all of symbols of the first flexible time unit;
   the repeater performs downlink forwarding on former n1 symbols of the first flexible time unit, and performs uplink forwarding on latter n2 symbols of the first flexible time unit, n1+n2 being not greater than a total number of symbols of the first flexible time unit; and
   the repeater performs no forwarding on the first flexible time unit.
15. The method according to supplement 11, wherein the first rule includes one of the following rules:
   the repeater only performs downlink forwarding on a part or all of symbols of the first flexible time unit;
   the repeater only performs uplink forwarding on a part or all of symbols of the first flexible time unit;
   the repeater performs downlink forwarding on former n1 symbols of the first flexible time unit, and performs uplink forwarding on latter n2 symbols of the first flexible time unit, n1+n2 being not greater than a total number of symbols of the first flexible time unit; and
   the repeater performs no forwarding on the first flexible time unit.
16. The method according to any one of supplements 1-15, wherein the determining the forwarding behavior on the first flexible time unit by the repeater includes:
   determining the forwarding behavior of the repeater on the first flexible time unit by the repeater according to whether a direction of forwarding on the first flexible time unit by the repeater indicated by a received first indication and a direction of forwarding on a second flexible time unit by the repeater indicated by a second indication received by a terminal equipment served by the repeater are consistent.
17. The method according to supplement 16, wherein,
   when the direction of forwarding on the first flexible time unit by the repeater indicated by the received first indication and the direction of forwarding on the second flexible time unit by the repeater indicated by the second indication received by the terminal equipment served by the repeater are consistent, the repeater performs uplink forwarding or downlink forwarding on the first flexible time unit;
   and when the direction of forwarding on the first flexible time unit by the repeater indicated by the received first indication and the direction of forwarding on the second flexible time unit by the repeater indicated by the second indication received by the terminal equipment served by the repeater are inconsistent, the repeater performs no forwarding on the first flexible time unit.
18. The method according to any one of supplements 5-17, wherein,
   for symbols in the flexible area unit indicated by the cell-common TDD configuration, when the repeater-dedicated time division duplex configuration is configured, the repeater does not expect to simultaneously receive repeater-dedicated time division duplex configuration signaling configured as transmission and repeater-dedicated time division duplex configuration signaling configured as reception.
19. The method according to any one of supplements 5-18, wherein,
   for a case where the repeater is configured with the semi-static time division duplex configuration,
   when the repeater is not configured to detect the dynamic time division duplex configuration and a group of symbols of a slot configured by the cell-common time division duplex configuration and the repeater-dedicated time division duplex configuration is flexible, or, when the repeater is not provided with the cell-common time division duplex configuration and the repeater-dedicated time division duplex configuration,
   when the repeater receives relevant indication of uplink forwarding, the repeater performs uplink forwarding; and/or,
   when the repeater receives relevant indication of downlink forwarding, the repeater performs downlink forwarding.
20. The method according to any one of supplements 5-19, wherein,
   for a case where the repeater is configured with the dynamic time division duplex configuration,
   when a group of symbols of a slot configured by the cell-common time division duplex configuration and the repeater-dedicated time division duplex configuration is flexible, or, when the repeater is not provided with the cell-common time division duplex configuration and the repeater-dedicated time division duplex configuration but detects a slot format provided by the dynamic time division duplex configuration and the slot format is not a 255 format,
   in a case where the repeater receives or detects a first indication indicating the repeater to perform uplink forwarding or downlink forwarding on the symbols of the slot, the repeater performs uplink forwarding or downlink forwarding on the symbols of the slot; and/or
   in a case where the repeater does not receive or detect the first indication indicating the repeater to perform uplink forwarding on the symbols of the slot or the first indication indicating the repeater to perform downlink forwarding on the symbols of the slot, the repeater does not perform uplink forwarding or downlink forwarding on the symbols of the slot.
21. The method according to any one of supplements 5-20, wherein,
   for a case where the repeater is configured with the dynamic time division duplex configuration,
   when a group of symbols of a slot configured by the cell-common time division duplex configuration and the repeater-dedicated time division duplex configuration is flexible, or, when the repeater is not provided with the cell-common time division duplex configuration and the repeater-dedicated time division duplex configuration and the dynamic time division duplex configuration provides no slot format,
   in a case where the repeater receives the first indication, the repeater performs uplink forwarding or downlink forwarding on the symbols of the slot.
22. The method according to any one of supplements 1-21, wherein,
   the time division duplex configuration information indicates at least one of a downlink time unit, a flexible time unit and an uplink time unit used by the repeater in forwarding, and/or indicates at least one of a downlink time unit, a flexible time unit and an uplink time unit used by the repeater in communication.
23. The method according to supplement 22, wherein,
   the time division duplex configuration information indicates at least one of the downlink time units, flexible time units and uplink time units used by the repeater in forwarding, and the time division duplex configuration information indicates at least one of the downlink time units, flexible time units and uplink time units used by the repeater in communication, or
   the repeater receives first time division duplex configuration information and second time division duplex configuration information respectively, wherein the first time division duplex configuration information indicates at least one of the downlink time unit, flexible time unit and uplink time unit used by the repeater in forwarding, and the second time division duplex configuration information indicates at least one of the downlink time unit, flexible time unit and uplink time unit used by the repeater in communication.
24. The method according to supplement 22 or 23, wherein the determining the forwarding behavior on the first flexible time unit by the repeater includes:
   determining the forwarding behavior and/or a communication behavior on the first flexible time unit by the repeater.
25. The method according to supplement 24, wherein,
   the communication behavior includes at least one of uplink transmission, downlink transmission and no transmission between the repeater and the network device.
26. The method according to supplement 25, wherein,
   the uplink transmission includes transmitting channels and/or signals by the repeater to the network device,
   and the downlink transmission includes receiving channels and/or signals by the repeater from the network device.
27. The method according to any one of supplements 24-26, wherein the determining the forwarding behavior and/or a communication behavior on the first flexible time unit by the repeater includes:
   determining the forwarding behavior and/or the communication behavior on the first flexible time unit by the repeater according to a default third rule.
28. The method according to supplement 27, wherein the third rule includes one of the following rules:
   on the first flexible time unit, the repeater performs communication but does not perform forwarding;
   on the first flexible time unit, the repeater performs forwarding but does not perform communication;
   on the first flexible time unit, the repeater performs communication and forwarding; and
   on the first flexible time unit, the repeater does not perform communication and forwarding.
29. The method according to any one of supplements 24-26, wherein the determining the forwarding behavior and/or a communication behavior on the first flexible time unit by the repeater includes:
   determining the forwarding behavior and/or the communication behavior on the first flexible time unit by the repeater according to a forwarding priority and a communication priority.
30. The method according to supplement 29, wherein,
   the forwarding priority is determined based on a priority of the terminal equipment served by the repeater and/or a priority of the services forwarded by the repeater.
31. The method according to supplement 29 or 30, wherein,
   when the forwarding priority is higher than the communication priority,
   the repeater determines that only forwarding is performed on the first flexible time unit and no communication is performed; or,
   the repeater determines that the repeater determines forwarding time area in the first flexible time unit first and then determines a communication time area in remaining areas of the first flexible time unit.
32. The method according to supplement 29 or 30, wherein,
   when the communication priority is higher than the forwarding priority,
   the repeater determines that only communication is performed on the first flexible time unit and no forwarding is performed; or,
   the repeater determines to determine the communication time area in the first flexible time unit first, and then determine the forwarding time area in remaining areas of the first flexible time unit.
33. A method for configuring a repeater, the method including:
   transmitting time division duplex (TDD) configuration information by a network device to a repeater.
34. The method according to supplement 33, wherein the method further includes:
   transmitting a first indication used for determining a forwarding behavior by the network device to the repeater.

## Claims

1. A device for configuring a repeater, the device being provided in the repeater, and the device comprising:
a first receiving unit configured to receive time division duplex (TDD) configuration information from a network device; and
a first determining unit configured to determine a forwarding behavior on a first flexible time unit.

2. The device according to claim 1, wherein,
a time-domain resource configured by the time division duplex configuration information comprises at least one of the following time units: a downlink time unit, a flexible time unit, and an uplink time unit.

3. The device according to claim 2, wherein,
the first flexible time unit comprises at least a part of the flexible time unit in the time division duplex configuration.

4. The device according to claim 1, wherein,
the time division duplex configuration comprises semi-static time division duplex configuration and/or dynamic time division duplex configuration,
wherein the semi-static time division duplex configuration is indicated by at least one of RRC signaling, MAC layer signaling and physical layer signaling, and the dynamic time division duplex configuration is indicated by at least one of RRC signaling, MAC layer signaling and physical layer signaling.

5. The device according to claim 4, wherein,
the semi-static time division duplex configuration comprises cell-common time division duplex configuration and/or repeater-dedicated time division duplex configuration,
the repeater-dedicated time division duplex configuration is configured only on a flexible area unit of the cell-common time division duplex configuration.

6. The device according to claim 1, wherein,
when one of overlapped normal cyclic prefix (CP) symbols is flexible, the repeater determines an extended cyclic prefix symbol as a flexible symbol on the flexible time unit; and/or,
when a pair of overlapped regular cyclic prefix symbols comprises a downlink symbol and an uplink symbol, the repeater determines the extended cyclic prefix symbol as a flexible symbol on the flexible time unit.

7. The device according to claim 1, wherein,
the forwarding behavior comprises at least one of uplink forwarding, downlink forwarding and no forwarding,
the uplink forwarding comprising forwarding a channel and/or a signal transmitted by a terminal equipment to the network device,
and the downlink forwarding comprising forwarding a channel and/or a signal transmitted by the network device to a terminal equipment.

8. The device according to claim 1, wherein,
the first determining unit determines the forwarding behavior on the first flexible time unit according to a first indication, or the first determining unit determines the forwarding behavior on the first flexible time unit according to a default first rule,
the first indication is configured via at least one of physical layer signaling, MAC layer signaling and RRC signaling.

9. The device according to claim 8, wherein,
when the repeater receives the first indication, the first determining unit determines the forwarding behavior on the first flexible time unit in a manner as below:
when the repeater receives the first indication, the first indication indicates the repeater to perform uplink forwarding on the first flexible time unit, and the first determining unit determines to, on the first flexible time unit, forward the channel and/or signal transmitted by a terminal equipment to the network device; and/or,
when the repeater receives the first indication, the first indication indicates the repeater to perform downlink forwarding on the first flexible time unit, and the first determining unit determines to, on the first flexible time unit, forward the channel and/or signal transmitted by the network device to a terminal equipment.

10. The device according to claim 8, wherein,
when the repeater has not received the first indication, the first determining unit determines the forwarding behavior on the first flexible time unit according to a default second rule, the second rule comprising one of the following rules:
the repeater only performs downlink forwarding on a part or all of symbols of the first flexible time unit;
the repeater only performs uplink forwarding on a part or all of symbols of the first flexible time unit;
the repeater performs downlink forwarding on former n1 symbols of the first flexible time unit, and performs uplink forwarding on latter n2 symbols of the first flexible time unit, n1+n2 being not greater than a total number of symbols of the first flexible time unit; and
the repeater performs no forwarding on the first flexible time unit.

11. The device according to claim 8, wherein the first rule comprises one of the following rules:
the repeater only performs downlink forwarding on a part or all of symbols of the first flexible time unit;
the repeater only performs uplink forwarding on a part or all of symbols of the first flexible time unit;
the repeater performs downlink forwarding on former n1 symbols of the first flexible time unit, and performs uplink forwarding on latter n2 symbols of the first flexible time unit, n1+n2 being not greater than a total number of symbols of the first flexible time unit; and
the repeater performs no forwarding on the first flexible time unit.

12. The device according to claim 1, wherein,
when a direction of forwarding on the first flexible time unit by the repeater indicated by a received first indication and a direction of forwarding on a second flexible time unit by the repeater indicated by a second indication received by a terminal equipment served by the repeater are consistent, the repeater performs uplink forwarding or downlink forwarding on the first flexible time unit;
and when the direction of forwarding on the first flexible time unit by the repeater indicated by the received first indication and the direction of forwarding on the second flexible time unit by the repeater indicated by the second indication received by the terminal equipment served by the repeater are inconsistent, the repeater performs no forwarding on the first flexible time unit.

13. The device according to claim 5, wherein,
for symbols in the flexible area unit indicated by the cell-common TDD configuration, when the repeater-dedicated time division duplex configuration is configured, the repeater does not expect to simultaneously receive repeater-dedicated time division duplex configuration signaling configured as transmission and repeater-dedicated time division duplex configuration signaling configured as reception.

14. The device according to claim 5, wherein,
for a case where the repeater is configured with the semi-static time division duplex configuration,
when the repeater is not configured to detect the dynamic time division duplex configuration and a group of symbols of a slot configured by the cell-common time division duplex configuration and the repeater-dedicated time division duplex configuration is flexible, or, when the repeater is not provided with the cell-common time division duplex configuration and the repeater-dedicated time division duplex configuration,
when the repeater receives relevant indication of uplink forwarding, the repeater performs uplink forwarding; and/or,
when the repeater receives relevant indication of downlink forwarding, the repeater performs downlink forwarding.

15. The device according to claim 5, wherein,
for a case where the repeater is configured with the dynamic time division duplex configuration,
when a group of symbols of a slot configured by the cell-common time division duplex configuration and the repeater-dedicated time division duplex configuration is flexible, or, when the repeater is not provided with the cell-common time division duplex configuration and the repeater-dedicated time division duplex configuration but detects a slot format provided by the dynamic time division duplex configuration and the slot format is not a 255 format,
in a case where the repeater receives or detects a first indication indicating the repeater to perform uplink forwarding or downlink forwarding on the symbols of the slot, the repeater performs uplink forwarding or downlink forwarding on the symbols of the slot; and/or
in a case where the repeater does not receive or detect the first indication indicating the repeater to perform uplink forwarding on the symbols of the slot or the first indication indicating the repeater to perform downlink forwarding on the symbols of the slot, the repeater does not perform uplink forwarding or downlink forwarding on the symbols of the slot;
and/or
when a group of symbols of a slot configured by the cell-common time division duplex configuration and the repeater-dedicated time division duplex configuration is flexible, or, when the repeater is not provided with the cell-common time division duplex configuration and the repeater-dedicated time division duplex configuration and the dynamic time division duplex configuration provides no slot format,
in a case where the repeater receives the first indication, the repeater performs uplink forwarding or downlink forwarding on the symbols of the slot.

16. The device according to claim 1, wherein,
the first determining unit determines the forwarding behavior and/or a communication behavior on the first flexible time unit according to a default third rule; or,
the first determining unit determines the forwarding behavior and/or a communication behavior on the first flexible time unit according to a forwarding priority and a communication priority.

17. The device according to claim 16, wherein the third rule comprises one of the following rules:
on the first flexible time unit, the repeater performs communication but does not perform forwarding;
on the first flexible time unit, the repeater performs forwarding but does not perform communication;
on the first flexible time unit, the repeater performs communication and forwarding; and
on the first flexible time unit, the repeater t performs no communication and no forwarding.

18. The device according to claim 16, wherein,
when the forwarding priority is higher than the communication priority,
the first determining unit determines that only forwarding is performed on the first flexible time unit and no communication is performed; or, the first determining unit determines that the repeater determines forwarding time area in the first flexible time unit first and then determines a communication time area in remaining areas of the first flexible time unit,
and / or,
when the communication priority is higher than the forwarding priority,
the first determining unit determines that only communication is performed on the first flexible time unit and no forwarding is performed; or, the first determining unit determines to determine the communication time area in the first flexible time unit first, and then determine the forwarding time area in remaining areas of the first flexible time unit.

19. A repeater, comprising the device as claimed in claim 1.

20. A communication system, comprising the repeater as claimed in claim 19 and a network device.
